# EUROPÄISCHE PATENTSCHRIFT

(11) **EP 3 456 483 B1**
(45) Veröffentlichungstag und Bekanntmachung des Hinweises auf die Patenterteilung: **14.04.2021**
(21) Anmeldenummer: 17191522.6
(22) Anmeldetag: 18.09.2017
(51) Int. Cl.: B25G 1/10, B25G 1/01, B29C 45/14, B29C 45/27, B25B 15/00

(54) **HANDWERKZEUG UND VERFAHREN ZUR HERSTELLUNG EINES HANDWERKZEUGS**
HANDHELD TOOL AND METHOD FOR PRODUCING A HANDHELD TOOL
OUTIL À MAIN ET PROCÉDÉ DE FABRICATION D'UN OUTIL À MAIN

(43) Veröffentlichungstag der Anmeldung: 20.03.2019
(73) Patentinhaber: Felo-Werkzeugfabrik Holland-Letz GmbH, 35279 Neustadt (DE)
(72) Erfinder: Holland-Letz, Martin, 35279 Neustadt (DE)
(74) Vertreter: REHBERG HÜPPE + PARTNER

(56) Entgegenhaltungen:
- EP-B1- 1 963 072
- DE-T2- 69 421 765
- DE-T2- 69 730 318

## Beschreibung

### TECHNISCHES GEBIET DER ERFINDUNG

Die Erfindung betrifft ein Handwerkzeug, bei welchem es sich beispielsweise um einen Schraubendreher, eine Zange, eine Maurerkelle oder einen Hammer handeln kann. Zwecks Vereinfachung wird im Folgenden teilweise Bezug genommen auf die Ausbildung des Handwerkzeugs als Schraubendreher, ohne dass eine Einschränkung der Erfindung oder der diesbezüglichen Ausführungen auf einen Schraubendreher erfolgen soll. Des Weiteren betrifft die Erfindung ein Verfahren zur Herstellung eines Handwerkzeugs.

### STAND DER TECHNIK

Handwerkzeuge verfügen über einen Griff, im Bereich dessen die Hand mit dem Handwerkzeug in Wechselwirkung treten kann, um manuell eine Betätigungskraft auf das Handwerkzeug zu applizieren. Für den Fall der Ausbildung des Handwerkzeugs als Schraubendreher handelt es sich bei der manuell applizierten Betätigungskraft vorzugsweise um eine Axialkraft, mit welcher eine Funktionsspitze eines metallischen Schaftes des Schraubendrehers in die korrespondierend gebildete Aufnahme der zur drehenden Schraube gedrückt wird, und um ein Torsionsmoment, welches über die Funktionsspitze an die Aufnahme der Schraube übertragen wird und die Drehung der Schraube verursachen soll. Ebenfalls möglich ist, dass im Bereich des Griffes eine impulsartige Axialkraft über einen auf die Stirnseite des Griffes applizierten Hammerschlag ausgeübt wird. Aus derartigen Nutzungsmöglichkeiten eines Handwerkzeuges resultiert ein Anforderungsprofil an den Griff derart, dass der Griff einerseits eine gute Ergonomie aufweisen soll, damit auch bei Applikation hoher Betätigungskräfte und/oder wiederholter Benutzung des Handwerkzeugs keine Ermüdung der Hand auftritt und keine Quetschungen oder Verletzungen der Hand auftreten. Andererseits soll der Griff auch mit einer geeigneten Steifigkeit die Betätigungskräfte an die Funktionsspitze übertragen und trotz der hohen Betätigungskräfte und trotz des Einsatzes des Handwerkzeugs in rauen Einsatzbedingungen (wie bei dem Werfen des Handwerkzeugs in eine Werkzeugkiste, in welcher spitze Schrauben und Nägel, Sägen u. ä. angeordnet sein können) verschleißfest sein.

Bei modernen Handwerkzeugen ist ein Schaft, insbesondere der die Funktionsspitze ausbildende metallische Schaft eines Schraubendrehers, eingebettet in einen Griff aus Kunststoff. Hierbei haben sich Zwei-Komponenten-Griffe durchgesetzt, bei welchen zunächst an einen Schaft ein Griffkern aus einem Hartkunststoff angespritzt wird, womit eine steife Verbindung zwischen Griffkern und Schaft gewährleistet werden kann. Der Griffkern kann dann eine Stirnseite oder endseitige Kappe des Griffes ausbilden, auf die dann auch hohe Axialkräfte oder Hammerschläge appliziert werden können mit einer steifen Übertragung der hierdurch erzeugten Axialkraft über den Griffkern zu dem Schaft. Der Griffkern wird in einer ersten Form an den Schaft angespritzt. Diese erste Form verfügt über eine Kavität, welche in einem Teilbereich kleiner ist als die Außenkontur des am Ende hergestellten Griffes. Nach dem Anspritzen des Hartkunststoffes zur Bildung des Griffkerns an den Schaft wird der Griffkern mit darin angeordnetem Schaft dann in eine zweite Form eingelegt, deren Kavität in dem genannten Teilbereich der am Ende herzustellenden Geometrie des Griffes entspricht. In den Hohlraum, der sich zwischen dieser Kavität der zweiten Form und dem Griffkern ergibt, wird dann ein Weichkunststoff eingespritzt, welcher die Reibungsverhältnisse für die Applikation des Torsionsmoments verbessern kann. Für derartige Zwei-Komponenten-Griffe erfolgt somit das sukzessive Spritzen der Kunststoffe radial von innen nach außen mit dem Anspritzen des Griffkerns aus dem Hartkunststoff an den Schaft und anschließendem Anspritzen des Griffpolsters mit dem Weichkunststoff an die Mantelfläche des Griffkerns. In diesem Fall nimmt die Steifigkeit des Griffes im Querschnittsbereich des Griffpolsters radial nach außen von dem metallischen Schaft über den Griffkern aus dem Hartkunststoff zu dem Weichkunststoff (oder auch abseits des Schaftes von dem Griffkern aus dem Hartkunststoff zu dem Griffpolster aus dem Weichkunststoff) ab. Eine Gestaltung der Steifigkeiten der eingesetzten Kunststoffmaterialien, des Griffkerns und des Griffpolsters erfolgt über die Wahl der eingesetzten Kunststoffe, die Zugabe von Weichmachern und/oder eine gezielte Einstellung einer Porosität über die Zugabe von Treibmitteln zu dem Kunststoff. Derartige Handgriffe in Zwei-Komponenten-Bauweise sind beispielsweise aus den Druckschriften DE 299 04 082 U1, US 6,370,986 B1, DE 295 15 833 U1, DE 299 00 746 U1, DE 295 17 276 U1, DE 195 39 200 A1, DE 20 2004 019 156 U1 (hier für einen Griff einer Zange), DE 35 25 163 C2, EP 0 538 632 A1, EP 1 314 519 A1, EP 0 627 974 B1, WO 95/18701 A1 bekannt.

Möglich ist auch, dass Komponenten eines Zwei-Komponenten-Griffes, hier ein Griffkern und eine ein Griffpolster bildende Hülse, separat gefertigt werden und dann fügend miteinander und mit dem Schaft verbunden werden (vgl. bspw. US 2,871,899 B).

Der mögliche Zielkonflikt, dass für eine gute Ergonomie des Griffes eine möglichst weiche Mantelfläche des Griffes angestrebt wird, andererseits aber die Übertragung der applizierten Betätigungskräfte möglichst steif erfolgen soll und/oder die Mantelfläche zur Gewährleistung der Verschleißfestigkeit eine gewisse Härte aufweisen soll, wird für einige bekannte Ausführungsformen dadurch gelöst, dass ein Griffpolster aus einem porösen Kunststoffmaterial mit einem Treibmittel hergestellt wird. Das Kunststoffmaterial härtet für diese Ausführungsformen im Bereich einer radial außenliegenden Mantelschicht sowie einer dem Griffkern zugewandten Innenschicht nicht porös aus, während nach dem Aushärten zwischen der Mantelschicht und der Innenschicht eine poröse Zwischenschicht verbleibt (vgl. bspw. US 2003/0172498 A1).

Das Patent EP 1 963 072 B1 der Anmelderin schlägt vor, in einem Sandwich-Verfahren ein Griffpolster dadurch herzustellen, dass in eine Kavität einer Form mit darin angeordnetem Griffkern zunächst ein erstes Kunststoffmaterial eingespritzt wird und dann in dieses erste Kunststoffmaterial ein zweites, weicheres Kunststoffmaterial eingespritzt wird, bis der sich zwischen dem Griffkern und der Kavität der Form ergebende Hohlraum vollständig ausgefüllt ist. Hierdurch ergibt sich ein Griffpolster, in welchem eine weichere, aus dem zweiten Kunststoffmaterial gebildete Innenschicht allseitig von dem härteren Kunststoffmaterial ummantelt ist. Diese Ummantelung aus dem härteren Kunststoffmaterial gewährleistet einerseits die erforderliche Verschleißfestigkeit der Mantelfläche des Griffes und andererseits eine gute Anbindung des Griffpolsters zur Übertragung der manuell applizierten Betätigungskräfte an den Griffkern.

Die Druckschrift DE 694 21 765 T2 offenbart die Herstellung eines Griffes für einen Schraubendreher, indem zunächst eine zweiteilige Kunststoffhülse hergestellt wird. Hierbei wird an eine innenliegende härtere Teilhülse eine außenliegende, weichere Teilhülse angespritzt, die ein in Umfangsrichtung umlaufendes Griffpolster bildet. Die zweiteilige Kunststoffhülse wird mit darin eingelegtem metallischen Schaft in eine Form eingelegt, deren Kavität der Geometrie des herzustellenden Griffes entspricht. Hierbei ergibt sich einerseits ein Zwischenraum zwischen dem Schaft und einer Innenbohrung der Kunststoffhülse und andererseits ein endseitiger Hohlraum zwischen der Kunststoffhülse und der Form. Ein Griffkern wird dann dadurch hergestellt, dass ein Hartkunststoff in die Kavität der Form eingespritzt wird, welcher dann sowohl den endseitigen Hohlraum als auch den Zwischenraum zwischen dem Schaft und der Kunststoffhülse ausfüllt mit stoffschlüssiger Anbindung sowohl an den Schaft als auch an die Kunststoffhülse.

Unterschiedliche Kunststoffmaterialien finden bei Griffen für Handwerkzeuge auch für eine Ausgestaltung der Mantelfläche des Griffes mit unterschiedlichen Farben Einsatz, um beispielsweise das optische Erscheinungsbild des Griffes zu verbessern, eine Abgrenzung des optischen Erscheinungsbildes des Handwerkzeugs gegenüber Handwerkzeugen der Wettbewerber mit der Erzeugung eines Wiedererkennungswertes herbeizuführen und/oder ein grafisches Zeichen oder Ziffern wie beispielsweise eine Marke eines Herstellers zu erzeugen.

Erfolgt die Herstellung von grafischen Zeichen oder Ziffern in einem Zwei-Komponenten-Verfahren, ist erforderlich, dass zunächst in einer ersten Kavität mittels einer Rippe, deren Verlauf der Ziffer entspricht, eine Nut in dem ersten Kunststoffmaterial hergestellt wird, welche dann in einer Form mit einer anderen Kavität von außen mit einem zweiten Kunststoffmaterial, dessen Farbe von der Farbe des ersten Kunststoffmaterials abweicht, gefüllt wird. Hierzu muss eine kleine Menge des zweiten Kunststoffmaterials zum Füllen der Nut mit dem kleinen Volumen der Kavität der zweiten Form über eine kleine Zuführöffnung von außen zugeführt werden, was aufwendig ist und eine hohe Fertigungsgenauigkeit erfordert.

Die Druckschrift DE 697 30 318 T2 schlägt vor, dass zunächst ein Griffkern an einen Schaft angespritzt wird. Der Griffkern verfügt in dem der Funktionsspitze abgewandten halbkugelförmigen Endbereich über Aussparungen in der Form eines Symbols oder einer Marke, die durch in dem Griffkern verlaufende Kanäle verbunden sind mit der Mantelfläche des Griffkerns in dem von der Hand des Benutzers umfassten Axialbereich. In diesem Axialbereich bildet der Griffkern in einer Form einen Hohlraum, welcher mit einem Kunststoffmaterial, dessen Farbe von der Farbe des Griffkerns abweicht, gefüllt werden kann. Hierbei tritt das Kunststoffmaterial auch über die Verbindungskanäle in die Aussparungen ein, womit sich nach dem Aushärten des Kunststoffmaterials in dem kugelförmigen Endbereich eine Ziffer, eine Markierung oder Marke ergibt, welche auch bei Schlägen auf diesen Endbereich abriebfest und auch bei der Ausbildung von Kerben oder Riefen in diesem Endbereich weiterhin sichtbar bleibt. Die Einspritzöffnungen für das Kunststoffmaterial sollen hierbei im Übergangsbereich von dem halbkugelförmigen Endbereich zu der von der Hand umfassten Mantelfläche des Griffes angeordnet sein. Vorgeschlagen wird auch, dass unterschiedliche Kunststoffmaterialien verwendet werden einerseits für die Herstellung der Markierung in dem halbkugelförmigen Endbereich und andererseits für das hülsenartige Griffpolster, welches den Griffkern umgibt.

### AUFGABE DER ERFINDUNG

Der Erfindung liegt die Aufgabe zugrunde, ein Handwerkzeug vorzuschlagen, welches insbesondere hinsichtlich
- der Herstellung,
- der Gestaltung der Steifigkeit des Griffes zur Gewährleistung der Ergonomie und des Übertragungsverhaltens einer manuell applizierten Betätigungskraft,
- der Gestaltung der Mantelfläche des Griffes mit Teilbereichen aus unterschiedlichen Kunststoffen,
- der Möglichkeiten für die Herstellung einer Ziffer oder eines grafischen Zeichens im Bereich der Mantelfläche des Griffes
verbessert ist. Des Weiteren liegt der Erfindung die Aufgabe zugrunde, ein entsprechend verbessertes Verfahren zur Herstellung eines Handwerkzeugs vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt ein Handwerkzeug vor, bei dem ein vorzugsweise metallischer Schaft in einen Griff derart form- und/oder stoffflüssig eingebettet ist, dass eine manuell applizierte Betätigungskraft zwischen dem Griff und dem Schaft übertragbar ist. Hierbei weist der Griff einen Griffkern aus einem ersten Kunststoffmaterial und einen Materialbereich aus einem zweiten Kunststoffmaterial auf. Das erste Kunststoffmaterial weicht von dem zweiten Kunststoffmaterial ab, was durch unterschiedliche Farben und/oder unterschiedliche Härten und/oder unterschiedliche Zusammensetzungen und/oder Porositäten und/oder unterschiedliche Elastizitäten der Fall sein kann.

Erfindungsgemäß schließt der Griffkern, (abweichend zu dem oben genannten Stand der Technik) nicht unmittelbar über die gesamte Mantelfläche des Schaftes, die in den Griff eingebettet ist, an den Schaft an. Vielmehr bildet der Griffkern innenliegend einen Zwischenraum mit dem Schaft aus. Dieser Zwischenraum ist mit einem ersten Materialbereich aus dem zweiten Kunststoffmaterial gefüllt. Damit erfolgt die Übertragung von Kräften zwischen dem Griffkern und dem Schaft nicht unmittelbar zwischen dem Griffkern und dem Schaft, sondern zumindest teilweise über den ersten Materialbereich aus dem zweiten Kunststoffmaterial. Somit kann je nach Wahl des ersten Kunststoffmaterials (also dem Material des Griffkerns) und der Wahl des zweiten Materials (also der Wahl des Materials des ersten Materialbereichs) Einfluss auf das Übertragungsverhalten zwischen Griffkern und Schaft genommen werden.

Darüber hinaus schlägt die Erfindung vor, dass an den Griffkern im Bereich seiner Außenfläche ein zweiter Materialbereich aus dem zweiten Kunststoffmaterial anschließt. Dieser zweite Materialbereich kann beispielsweise die Mantelfläche des Griffes des Handwerkzeugs ausbilden, so dass mittels des zweiten Materialbereichs ein Griffpolster hergestellt werden kann oder auch eine farbige Abgrenzung oder Umrandung einer Ziffer oder eines grafischen Zeichens erfolgen kann. Bildet der zweite Materialbereich ein Griffpolster aus, kann sich dieses bspw. als eine Art "Facette" lediglich über einen Teilumfangsbereich sowie einen Teilaxialbereich erstrecken, wobei in diesem Fall mehrere Griffpolster über den Umfang verteilt angeordnet sein können oder sogar mehrere Sätze derartiger über den Umfang verteilter Griffpolster axial nebeneinanderliegend angeordnet sein können.

Erfindungsgemäß sind der erste Materialbereich und der zweite Materialbereich durch einen radialen, mit dem zweiten Kunststoffmaterial gefüllten Verbindungskanal des Griffkerns miteinander verbunden. Dies vereinfacht die Herstellung des Handwerkzeugs, da nicht separate Einspritzöffnungen für die Herstellung des ersten Materialbereichs und des zweiten Materialbereichs erforderlich sind. Für den Fall, dass das zweite Kunststoffmaterial von dem ersten Materialbereich radial nach außen durch den Verbindungskanal des Griffkerns zu dem zweiten Materialbereich gelangt, können radial außen liegende Einspritzöffnungen einer Form für die Bildung des zweiten Materialbereichs entbehrlich sein. Für den Fall, dass, beispielsweise für die Ausbildung mehrerer Griffpolster oder Ziffern oder grafischer Zeichen, mehrere zweite Materialbereiche aus dem zweiten Kunststoffmaterial hergestellt werden sollen, kann das Erzeugen der zweiten Materialbereiche auch nicht durch jeweils einem zweiten Materialbereich zugeordnete einzelne Einspritzöffnungen erfolgen, sondern dieses kann durch eine einzige Einspritzöffnung oder wenige Einspritzöffnungen, die unmittelbar in den Zwischenraum münden, erfolgen. Vorteilhaft ist dies auch für den Fall, dass verhältnismäßig kleine zweite Materialbereiche, insbesondere für kleine Ziffern oder grafische Zeichen, hergestellt werden sollen, da erfindungsgemäß in diesem Fall kleine Einspritzöffnungen der Form für die Befüllung der zweiten Materialbereiche von außen vermieden werden können. Unter Umständen kann mittels der Erstreckung des zweiten Materials zwischen dem ersten Materialbereich und dem zweiten Materialbereich durch den Verbindungskanal auch die Verbindung zwischen Griffkern und den Materialbereichen verbessert werden.

Ein weiterer möglicher Vorteil der erfindungsgemäßen Ausgestaltung kann sein, dass nicht sämtliche Kunststoffschichten des Griffes sukzessive in einem Spritzgießverfahren hergestellt und aneinander angespritzt werden müssen. Vielmehr kann der Griffkern zunächst als separates Teil hergestellt werden und dann in einem einzigen Einspritzschritt ein Einspritzen des zweiten Kunststoffmaterials in eine Form erfolgen, in welche sowohl der Griffkern als auch der Schaft unter Ausbildung des Zwischenraums eingelegt sind. Möglich ist aber auch, dass dann in mehreren Einspritzschritten in unterschiedliche Formen mehrere Schichten aus Kunststoff an den Griffkern angespritzt werden.

Das Anschließen des zweiten Materialbereichs aus dem zweiten Kunststoffmaterial an den Griffkern im Bereich der Außenfläche des Griffkerns kann im Rahmen der Erfindung beispielsweise auf zwei unterschiedliche Weisen erfolgen:
Möglich ist, dass der zweite Materialbereich nach außen an die Außenfläche des Griffkerns anschließt und an die Außenfläche stoffschlüssig angebunden ist. In diesem Fall kann der genannte Verbindungskanal eine Erweiterung aufweisen oder in eine Tasche einmünden, die einen Aufnahmeraum für das zweite Kunststoffmaterial ausbildet und deren Boden von einer Außenfläche des Griffkerns gebildet ist. Durch den Verbindungskanal tritt dann das zweite Kunststoffmaterial in die Erweiterung oder Tasche ein. In der Tasche ist dann das zweite Kunststoffmaterial axial oder radial außenliegend von dem Griffkern angeordnet. In diesem Fall erfolgt das "Anschließen des zweiten Materialbereichs aus dem zweiten Kunststoffmaterial an den Griffkern" durch ein radiales oder axiales Anschließen des zweiten Materialbereichs an den Griffkern.

Möglich ist aber auch, dass keine derartige Erweiterung des Verbindungskanals vorhanden ist oder der Verbindungskanal nicht in eine Tasche einmündet. In diesem Fall tritt das zweite Kunststoffmaterial durch den Verbindungskanal bis zu dem Erreichen der benachbarten Außenfläche des Griffkerns hindurch. Es können sich dann (vorzugsweise bündige) Außenflächen einerseits des Griffkerns aus dem ersten Kunststoffmaterial im Umgebungsbereich des Verbindungskanals und andererseits des zweiten Materialbereichs aus dem zweiten Kunststoffmaterial, der von der Stirnseite des am Weitesten durch den Verbindungskanal hindurchgetretenen zweiten Kunststoffmaterials gebildet ist und innerhalb des Verbindungskanals angeordnet ist, ergeben. In diesem Fall ist der Aufnahmeraum für das zweite Kunststoffmaterial von dem Verbindungskanal ohne eine Erweiterung oder Tasche ausgebildet und das "Anschließen des zweiten Materialbereichs aus dem zweiten Kunststoffmaterial an den Griffkern" erfolgt durch ein Anschließen im Bereich einer außenliegenden Begrenzungsfläche oder Begrenzungslinie des Verbindungskanals.

Die Gestaltung der Geometrie und Wandstärken des Griffkerns kann im Rahmen der Erfindung beliebig sein. Grundsätzlich ist unter Umständen gewünscht, dass eine minimale Wandstärke des Griffkerns gewährleistet ist, um beispielsweise eine hinreichende Steifigkeit und Festigkeit des Griffkerns zur Aufnahme und Übertragung der manuellen applizierten Betätigungskraft zu ermöglichen. Für einen Vorschlag der Erfindung ist die Wandstärke des Griffkerns im Umgebungsbereich des Verbindungskanals durch eine Ausnehmung, Stufe oder Nut reduziert. Diese Ausgestaltung hat zur Folge, dass grundsätzlich der Verbindungskanal für eine Übertragung des lediglich begrenzt fließfähigen zweiten Kunststoffmaterials zwischen dem ersten und dem zweiten Materialbereich eine reduzierte Länge aufweist, womit ein Übertritt des zweiten Kunststoffmaterials zwischen dem Zwischenraum und dem zweiten Materialbereich vereinfacht ist, da dieses nicht durch einen zu langen Verbindungskanal "gedrückt" werden muss und fließen muss.

Im Rahmen der Erfindung kann der Schaft auch lediglich in einem oder mehreren Teilbereichen in das zweite Kunststoffmaterial eingebettet sein. Für einen Vorschlag der Erfindung ist der Schaft in dem Längsabschnitt, welcher in dem Griff angeordnet ist, über die gesamte Länge, also im Bereich seiner gesamten in dem Griff angeordneten Mantelfläche, in den ersten Materialbereich aus dem zweiten Kunststoffmaterial eingebettet. Somit ist die maximale Mantelfläche des Schaftes für die stoffschlüssige Anbindung des zweiten Kunststoffmaterials genutzt, womit sich ein gutes Übertragungsverhalten für die manuell applizierte Betätigungskraft ergibt. Für die Abstützung der innenliegenden Stirnseite des Schafts schlägt die Erfindung hierbei zwei Varianten vor:
Für eine erste Variante ist der Schaft unmittelbar an einem Boden einer beispielsweise sacklochartigen Längsausnehmung des Griffkerns für den Schaft abgestützt. Dies hat den Vorteil, dass für das Positionieren des Schafts in dem Griffkern die Axialposition dadurch vorgegeben ist, dass der Schaft an dem Boden der Längsausnehmung des Griffkerns zur Anlage kommt, womit dieses Positionieren vereinfacht ist und auch prozesssicher gewährleistet werden kann. Andererseits kann insbesondere für den Fall, dass der Griffkern aus einem Hartkunststoff hergestellt ist, die unmittelbare Abstützung des Schaftes an dem Boden der Längsausnehmung der Griffkerns vorteilhaft sein, da in diesem Fall zwischen der Stirnseite des Schaftes und dem Boden eine unmittelbare und steife Abstützung der Axialkraft erfolgen kann.

Für eine zweite Variante befindet sich die Stirnseite des Schaftes in einem definiertem Abstand von dem Boden einer Längsausnehmung des Griffkerns für den Schaft, so dass zwischen der Stirnseite des Schaftes und dem Boden ebenfalls der erste Materialbereich aus dem zweiten Kunststoffmaterial angeordnet ist, welches die stoffschlüssige Anbindung sowohl an die Stirnseite des Schaftes als auch an den Boden der Längsausnehmung des Griffkerns gewährleistet. Somit beeinflusst das zweite Kunststoffmaterial auch das mechanische Übertragungsverhalten einer Axialkraft zwischen dem Boden des Griffkerns und der Stirnseite des Schaftes.

Durchaus möglich ist im Rahmen der Erfindung, dass der Griffkern und/oder der zweite Materialbereich teilweise oder vollständig von mindestens einem weiteren Material ummantelt sind, welches dann eine Mantelfläche des Griffes bildet. Für einen Vorschlag der Erfindung ist mindestens eine Teil-Mantelfläche des Griffes von dem zweiten Materialbereich aus dem zweiten Kunststoffmaterial ausgebildet, wobei diese Teil-Mantelfläche dann beispielsweise die Teil-Mantelfläche eines Griffpolsters sein kann oder eine Außenfläche mit einer äußeren Umrandung oder eine Innenfläche mit einer inneren Eingrenzung einer Ziffer oder eines grafischen Zeichens der Mantelfläche bilden kann. Für diesen Vorschlag der Erfindung ist mindestens eine andere Teil-Mantelfläche des Griffs von dem Griffkern ausgebildet, wobei diese Teil-Mantelfläche eine äußere Umrandung eines Griffpolsters bilden kann oder eine Ziffer oder ein grafisches Symbol der Mantelfläche des Griffes bilden kann.

Möglich ist auch, dass mindestens eine von dem Griffkern ausgebildete Teil-Mantelfläche eine endseitige (beispielsweise kappenförmige oder halbkugelförmige) Stirnseite des Griffes ausbildet. Werden dann mit der flachen Hand hohe Axialkräfte auf die Stirnseite des Griffes aufgebracht oder auch mit Hammerschlägen hohe Axialkräfte auf die Stirnseite des Griffes aufgebracht, werden diese hohen Axialkräfte unmittelbar in den Griffkern eingeleitet, von welchem diese dann über eine verhältnismäßig große Kontaktfläche über das in dem Zwischenraum angeordnete zweite Kunststoffmaterial und/oder zwischen einer innenliegenden Stirnseite des Schaftes und dem Boden der Längsausnehmung des Griffkerns (unmittelbar oder unter Zwischenordnung des zweiten Kunststoffmaterials) an den Schaft übertragen werden können.

Für eine weitere Ausgestaltung des erfindungsgemäßen Handwerkzeugs bildet der Griffkern im Bereich einer einer Funktionsspitze zugewandten Stirnseite einen Kragen aus, der vorzugsweise umlaufend ausgebildet ist und unmittelbar einen Teil der Mantelfläche des Griffes bildet. Dieser Kragen kann einerseits als Abstützfläche für die Applikation von Axialkräften durch die Hand des Benutzers dienen. Andererseits kann der Kragen als eine Art Abrutschschutz dienen und/oder auch vermeiden, dass Verletzungen der den Griff umschließenden Hand von der Seite der Funktionsspitze durch kollidierende Bauelemente eintreten. Möglich ist auch, dass der Kragen mindestens eine Abflachung ausbildet, welche als Angriffsfläche für ein Werkzeug zur Applikation eines Torsionsmomentes dient oder als Ablagefläche des Handwerkzeugs auf einer Unterlage dient.

Im Rahmen der Erfindung kann der Kragen unmittelbar die Stirnseite des Griffes ausbilden. Ebenfalls möglich ist, dass ein Übergang von dem Kragen über einen vorgeordneten Materialbereich aus dem zweiten Kunststoffmaterial zu dem Schaft erfolgt. Vorzugsweise ist ein derartiger Übergangsbereich verjüngt ausgebildet.

In einem erfindungsgemäßen Handwerkzeug kann eine von dem Griffkern ausgebildete Teil-Mantelfläche eine Ziffer oder ein grafisches Zeichen ausbilden, während das zweite Kunststoffmaterial mit einem zweiten Materialbereich im Inneren der Ziffer oder des grafischen Zeichens eine Teil-Mantelfläche ausbildet. Um lediglich ein nicht beschränkendes Beispiel zu nennen, kann für die Ausbildung einer Ziffer "O" das zweite Kunststoffmaterial die kreisförmige Innenfläche des "O" bilden, während der kreisförmige Strich der Ziffer "O" von einer Rippe des Griffkerns aus dem ersten Kunststoffmaterial ausgebildet wird. In diesem Fall kann die Ziffer "O" auch außen von dem zweiten Kunststoffmaterial umgeben sein. Das Entsprechende gilt für beliebige andere Ziffern oder grafische Zeichen. Vorzugsweise mündet dann ein Verbindungskanal von dem Zwischenraum in diesen zweiten Materialbereich. Die im Inneren der Ziffer oder des grafischen Zeichens ausgebildete Teil-Mantelfläche kann eine verhältnismäßig kleine Fläche sein, die bspw. sogar kleiner als 1 cm², 0,7 cm², 0,5 cm², 0,3 cm², 0,1 cm², 0,05 cm², 0,02 cm² oder sogar 0,015 cm² sein kann.

Während grundsätzlich für die unterschiedliche Gestaltung des ersten Kunststoffmaterials und des zweiten Kunststoffmaterials im Rahmen der Erfindung keine Einschränkungen gegeben sind, ist für eine erfindungsgemäße Ausgestaltung das erste Kunststoffmaterial härter und/oder steifer als das zweite Kunststoffmaterial. Dies kann einerseits für die Bildung weicher Griffpolster mit dem zweiten Kunststoffmaterial genutzt werden. Hingegen ist der Griffkern mit einer verhältnismäßig großen Härte und/oder Steifigkeit ausgestattet, was die Möglichkeit der Übertragung großer manuell applizierter Betätigungskräfte, insbesondere im Bereich der endseitigen Stirnfläche des Griffes, bereitstellt.

Unter Umständen kann die Nutzung eines zweiten Kunststoffmaterials mit einer kleineren Härte als das erste Kunststoffmaterial auch zu folgendem Zweck genutzt werden: Für eine hohe Beständigkeit der Funktionsspitze bei den hohen, in dem Kontakt zwischen Funktionsspitze und Aufnahme der Schraube wirkenden Flächenpressungen finden unter Umständen sehr harte Funktionsspitzen Einsatz. Für eine sehr steife Verbindung des Griffes mit dem Schaft und der Funktionsspitze erfolgt die Applikation eines Torsionsmomentes mit sehr kleinen Verformungen des Griffes, des Schaftes und der Funktionsspitze. Untersuchungen haben gezeigt, dass damit die Steuerung der Größe des applizierten Torsionsmomentes durch den Benutzer vorrangig durch die Steuerung der Muskelkraft durch den Benutzer erfolgt, während dem Benutzer bei festsitzender Schraube keinerlei haptische Rückmeldung in Form einer elastischen Verformung des Schraubendrehers gegeben wird dahingehend, wie groß das applizierte Torsionsmoment ist. Dies äußert sich schlimmstenfalls in der Praxis darin, dass infolge einer nicht genauen Steuerung überhöhte Torsionsmoment appliziert werden, welche ohne Vorwarnung zu einer Beschädigung der Aufnahme der Schraube führen können. Ist erfindungsgemäß zwischen dem Griffkern und dem Schaft ein zweites Kunststoffmaterial angeordnet, welches eine kleinere Steifigkeit aufweist als das erste Kunststoffmaterial, welches den Griffkern bildet, führt die Applikation des Torsionsmomentes zu einer elastischen Verformung des in dem Zwischenraum zwischen Schaft und Griffkern angeordneten zweiten Kunststoffmaterials, so dass sich der Griffkern geringfügig um die Längsachse des Schaftes relativ zu dem Schaft verdrehen kann, obwohl die Schraube sich nicht bewegt. Durch die Steuerung der Steifigkeit des zweiten Kunststoffmaterials kann somit ermöglicht werden, dass eine haptische Rückmeldung an den Benutzer des Handwerkzeugs gegeben werden.

Möglich ist aber auch, dass das zweite Kunststoffmaterial genauso hart oder sogar härter ist als das erste Kunststoffmaterial, womit dann eine besonders gute Anbindung zwischen dem Schaft, dem zweiten Kunststoffmaterial und dem Griffkern aus dem ersten Kunststoffmaterial gewährleistet.

Möglich ist, dass im Rahmen der Erfindung der Griff lediglich aus zwei Kunststoffmaterialien hergestellt ist. Für einen anderen Vorschlag der Erfindung ist an den Griffkern und/oder einen Materialbereich aus dem zweiten Kunststoffmaterial ein Griffpolster aus einem dritten Kunststoffmaterial angespritzt. Somit kann gezielt durch die Wahl der physikalischen Eigenschaften der unterschiedlichen Kunststoffmaterialien die Beeinflussung des mechanischen Verhaltens und/oder der optischen Eigenschaften der unterschiedlichen Materialbereiche aus dem Kunststoffmaterial erfolgen. Beispielsweise kann das dritte Kunststoffmaterial gezielt angepasst werden an die Ausstattung der Griffpolster mit einer geeigneten Elastizität und Verschleißfestigkeit. Andererseits kann das erste Kunststoffmaterial für die Ausbildung des Griffkerns so steif ausgebildet werden, dass auch die Applikation von Hammerschlägen auf den Endbereich des Griffkerns möglich ist. Schließlich kann das zweite Kunststoffmaterial, mit welchem der Zwischenraum zwischen dem Schaft und dem Griffkern gefüllt ist, gezielt auf die gewünschten Übertragungseigenschaften zwischen dem Griffkern und dem Schaft angepasst werden. Um lediglich ein nicht beschränkendes Beispiel zu nennen, kann die Mantelfläche des Griffes sowohl mit dem ersten Kunststoffmaterial des Griffkerns als auch mit den zweiten Materialbereichen aus dem zweiten Kunststoffmaterial als auch aus dem dritten Kunststoffmaterial, welches dann Griffpolster ausbildet, gebildet sein.

Für das zuvor erläuterte Ausführungsbeispiel können für einen weiteren Vorschlag der Erfindung das erste Kunststoffmaterial und das zweite Kunststoffmaterial größere Härten aufweisen als das dritte Kunststoffmaterial.

Eine weitere Lösung der der Erfindung zugrunde liegenden Aufgabe stellt ein Verfahren zur Herstellung eines Handwerkzeugs, wie dieses zuvor beschrieben worden ist, dar. In einem derartigen Verfahren wird in einem ersten Verfahrensschritt der Griffkern aus dem ersten Kunststoffmaterial, welcher zuvor gefertigt worden ist und einen Einleger für eine Form bildet, zusammen mit dem Schaft in die Form eingelegt. Hierbei bilden der Griffkern und der Schaft einen (bspw. hohlzylinderförmigen) Zwischenraum aus, welcher sich für eine Variante der Erfindung auch zwischen eine innenliegende Stirnseite des Schaftes und einem Boden des Griffkerns erstreckt. Die Form, in welche der Griffkern und der Schaft eingelegt werden, verfügt über eine Kavität, welche in mindestens einem Teilbereich der Außenkontur des Griffkerns entspricht und in mindestens einem anderen Teilbereich der Außenkontur des zweiten Materialbereichs entspricht. In einem anschließenden Verfahrensschritt kann dann das zweite Kunststoffmaterial in den Zwischenraum zwischen Schaft und Griffkern eingespritzt werden. Mit zunehmendem Eintritt des zweiten Kunststoffmaterials in den Zwischenraum wird dann das zweite Kunststoffmaterial auch von dem Zwischenraum durch den Verbindungskanal des Griffkerns in den zweiten Materialbereich überführt.

Alternativ möglich ist, dass nicht der Schaft in die Form eingelegt wird, sondern ein Kern, dessen Form der Außengeometrie des Schaftes entspricht. In diesem Fall wird der Griff des Handwerkzeugs zunächst als Halbzeug ohne den darin angeordneten Schaft hergestellt. Nach Entfernen des Kerns, dessen Form der Außengeometrie des Schaftes entspricht, kann der Schaft dann in den Griff eingebracht oder eingepresst werden.

Für den Fall, dass der Griff ausschließlich mit dem aus dem ersten Kunststoffmaterial hergestellten Griffkern und dem zweiten Kunststoffmaterial besteht, kann für eine Ausgestaltung des Verfahrens die Kavität der Form der Geometrie des herzustellenden Griffes entsprechen.

Hingegen entspricht für eine andere Variante des erfindungsgemäßen Verfahrens die Kavität der Form in einem Teilbereich der Geometrie des herzustellenden Griffes, während diese in einem anderen Teilbereich kleiner ist als die Geometrie des herzustellenden Griffes. In diesem Fall wird nach dem Aushärten des in den Zwischenraum eingespritzten Kunststoffmaterials und nach dem Hindurchtritt des zweiten Kunststoffmaterials durch den Verbindungskanal zu dem zweiten Materialbereich der Griffkern mit dem Schaft und dem ausgehärteten zweiten Kunststoffmaterial als Zwischenprodukt in eine andere Form eingelegt. Die Kavität der anderen Form entspricht in dem Teilbereich, in dem die Kavität der zuvor verwendeten Form kleiner war als die Geometrie des herzustellenden Griffes, der Geometrie des herzustellenden Griffes. Somit ergibt sich zwischen dem Griffkern und/oder dem ausgehärteten zweiten Kunststoffmaterial in der nun verwendeten Form ein Hohlraum. In einem anschließenden Verfahrensschritt wird dann in den Hohlraum das dritte Kunststoffmaterial eingespritzt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem zweiten Materialbereich oder einem Griffpolster die Rede ist, ist dies so zu verstehen, dass
- genau ein zweiter Materialbereich oder ein Griffpolster,
- zwei zweite Materialbereiche oder Griffpolster oder
- mehr zweite Materialbereiche oder Griffpolster
vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Handwerkzeug, hier einen Schraubendreher, in einer Seitenansicht.
- **Fig. 2**: zeigt einen Ausschnitt aus der Seitenansicht des Handwerkzeuges gemäß Fig. 1 im Bereich eines grafischen Zeichens und von Ziffern.
- **Fig. 3**: zeigt einen Griffkern eines Handwerkzeugs gemäß Fig. 1 in einer räumlichen Darstellung.
- **Fig. 4**: zeigt in einer räumlichen Darstellung eine Form, in die ein Griffkern gemäß Fig. 3 mit einem darin eingelegten Schaft eingelegt ist.
- **Fig. 5**: zeigt in einer Fig. 4 entsprechenden Darstellung die Form mit Griff und Schaft nach dem Einspritzen eines zweiten Kunststoffmaterials.
- **Fig. 6 bis 8**: zeigen in einem schematischen Teillängsschnitt den zunehmenden Eintritt eines zweiten Kunststoffmaterials in einen Zwischenraum, Verbindungskanäle des Griffkerns und Aufnahmeräume der Mantelfläche des Griffkerns bei einem Einspritzen des zweiten Kunststoffmaterials in die Form gemäß Fig. 4 und 5.
- **Fig. 9**: zeigt ein Handwerkzeug, hier einen Schraubendreher, in einer Seitenansicht.
- **Fig. 10**: zeigt das Handwerkzeug gemäß Fig. 9 in einer räumlichen Darstellung.
- **Fig. 11**: zeigt in einer Explosionsdarstellung unterschiedliche Bestandteile des Handwerkzeugs gemäß Fig. 9 und 10, nämlichen einen Schaft, einen Griffkern, einen Griffkörper aus einem zweiten Kunststoffmaterial sowie zwei Griffpolster aus einem dritten Kunststoffmaterial.
- **Fig. 12**: zeigt in einer räumlichen Darstellung einen Griffkern mit einem in einer Form zur Herstellung des Griffkerns verwendeten Spritzgießkern.
- **Fig. 13**: zeigt in einer räumlichen Darstellung einen Halblängsschnitt durch einen Griffkern.
- **Fig. 14**: zeigt in einer räumlichen teilgeschnittenen Darstellung eine Form mit darin angeordnetem Griffkern und wiederum darin angeordnetem Schaft und eingespritztem zweitem Kunststoffmaterial.
- **Fig. 15**: zeigt die Form mit Schaft, Griffkern und zweitem Kunststoffmaterial in einem Halblängsschnitt.
- **Fig. 16**: zeigt die Form mit Schaft, Griffkern und zweitem Kunststoffmaterial in einem Teillängsschnitt und -querschnitt.
- **Fig. 17**: zeigt ein Zwischenprodukt aus dem Schaft, dem Griffkern und dem zweiten Kunststoffmaterial in einer weiteren Form zur Herstellung von zwei Griffpolstern aus einem dritten Kunststoffmaterial.

### FIGURENBESCHREIBUNG

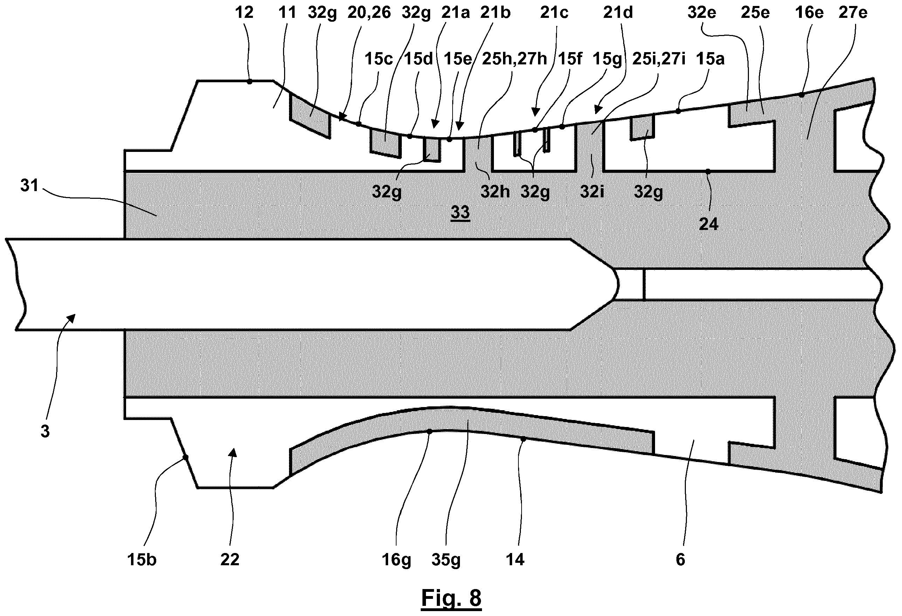

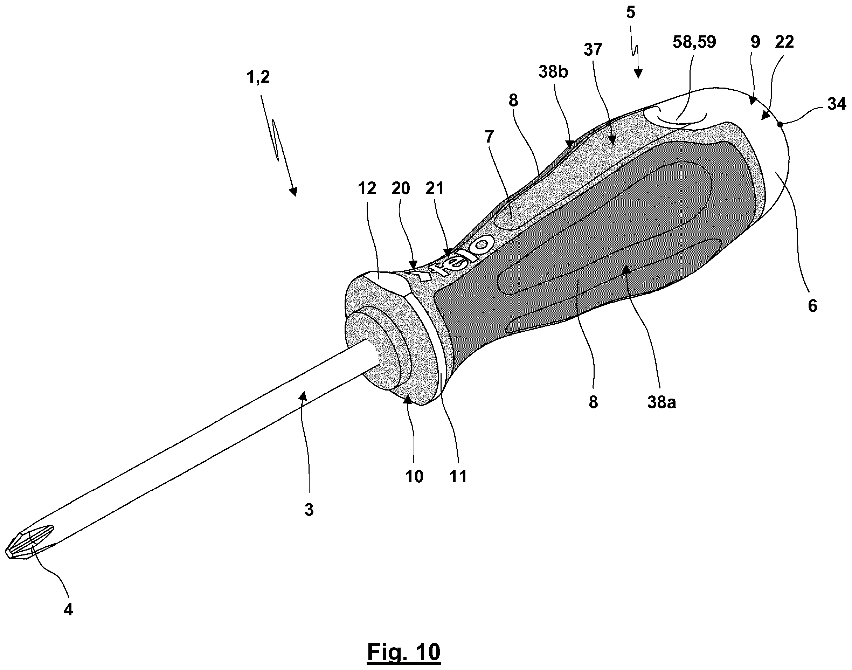

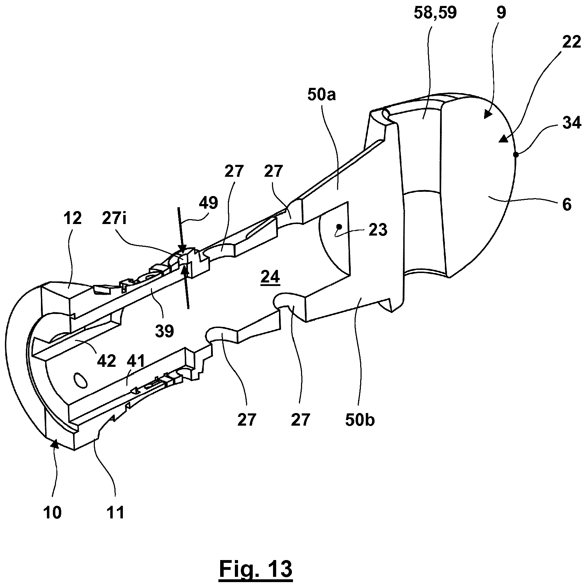

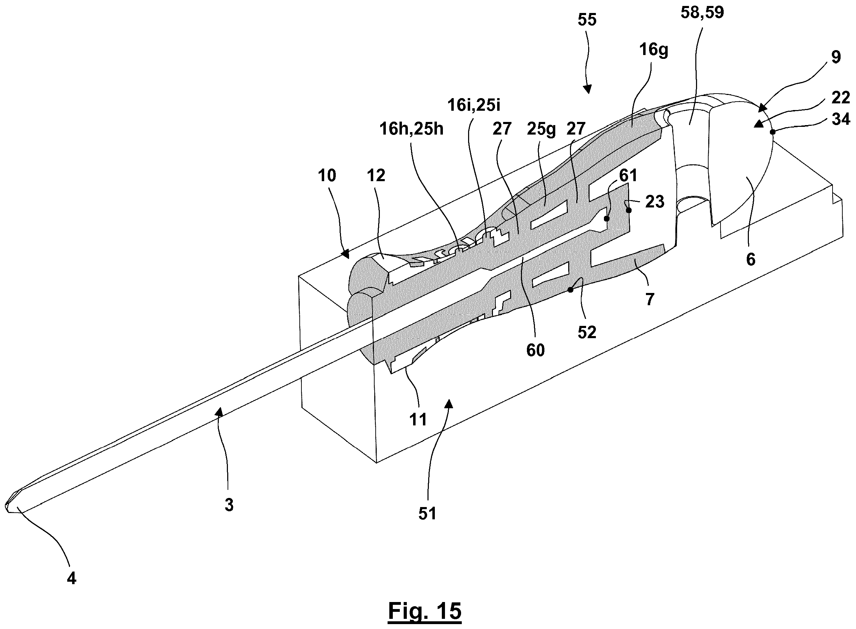

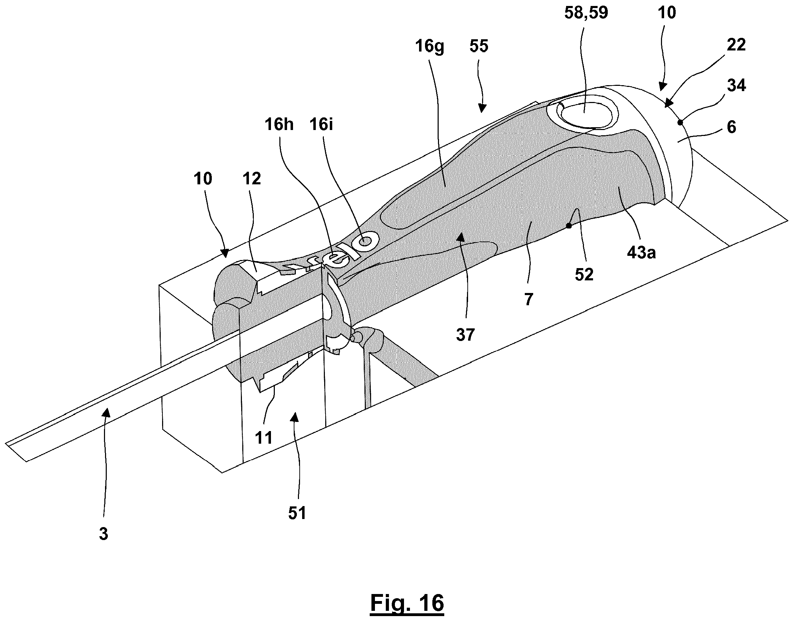

In den Figuren sind unterschiedliche Handwerkzeuge 1 dargestellt, welche hier als Schraubendreher 2 ausgebildet sind. Der Schraubendreher 2 verfügt über einen Schaft 3, von dem ein Endbereich eine Funktionsspitze 4 ausbildet, während der andere Endbereich formschlüssig und/oder stoffschlüssig in einen Griff 5 eingebettet ist. Der Griff 5 ist aus unterschiedlichen Kunststoffmaterialien hergestellt, die in den Figuren durch weiße Flächen und unterschiedliche Grautöne voneinander unterschieden sind. Hierbei kennzeichnen weiße Flächen des Kunststoffmaterials des Griffes 5 ein erstes Kunststoffmaterial 6, während hellgraue Flächen ein zweites Kunststoffmaterial 7 kennzeichnen. Für das in den **Fig. 8 bis 16** dargestellte Ausführungsbeispiel kennzeichnen dunkelgraue Flächen ein drittes Kunststoffmaterial 8.

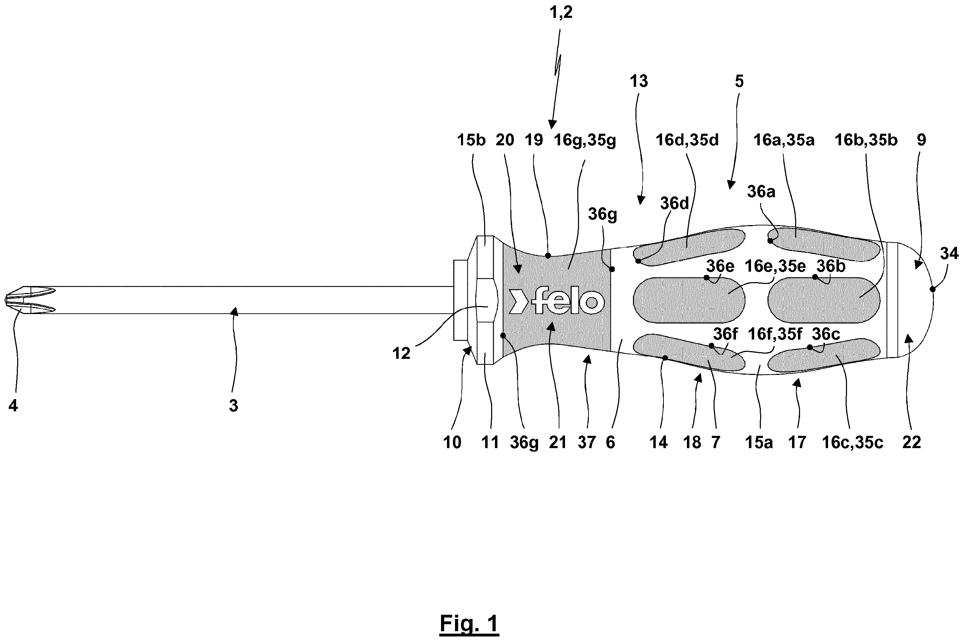

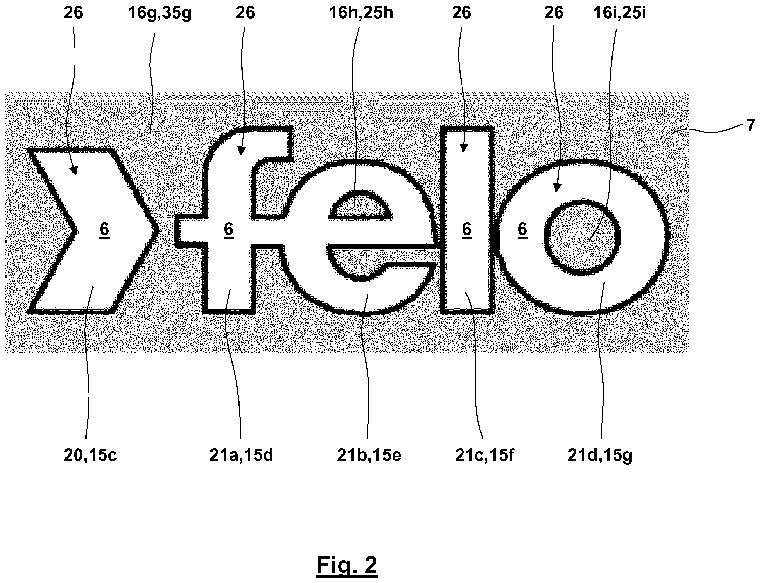

Gemäß **Fig. 1** verfügt der Griff 5 über einen Endbereich 9, welcher eine konvexe Kontur aufweist und in grober Näherung halbkugelförmig ausgebildet ist. Der Endbereich 9 bildet eine Stirnseite 34 des Griffes 5 aus. In dem anderen Endbereich 10 verfügt der Griff 5 über einen Kragen 11 mit grundsätzlich zylindrischer Mantelfläche und parallelen Abflachungen 12, welche als Ausrichtflächen für das Einlegen eines Griffkerns in eine Form oder auch als Ablagefläche des Schraubendrehers 2 auf einer Unterlage dienen können. Zwischen den Endbereichen 9, 10 bildet der Griff 5 einen Betätigungsbereich 13 aus, welcher von der Hand des Benutzers umfasst wird und auf dessen Mantelfläche 14 der Benutzer Betätigungskräfte, insbesondere Axialkräfte und einen Torsionsmoment aufbringt. Von der Mantelfläche 14 sind Teil-Mantelflächen 15a, 15b von dem ersten Kunststoffmaterial 6 ausgebildet, welche in Fig. 1 mit weißen Flächen gekennzeichnet sind, während Teil-Mantelflächen 16a, 16b, ... aus dem zweiten Kunststoffmaterial 7 hergestellt sind und mit hellgrauen Flächen gekennzeichnet sind. Im Bereich der Teil-Mantelfläche 15a sind in Sätzen 17, 18 jeweils sechs Teil-Mantelflächen 16, von denen in Fig. 1 lediglich drei Teil-Mantelflächen 16a, 16b, 16c bzw. 16d, 16e, 16f dargestellt sind, gleichmäßig über den Umfang verteilt. Die Sätze 17, 18 der Teil-Mantelflächen 16 sind in axialer Richtung nebeneinander angeordnet und bilden Unterbrechungen der Teil-Mantelfläche 15a. Die Teil-Mantelflächen 16 verfügen jeweils über Außenkonturen mit halbkreisförmigen Endbereichen, welche über Geraden miteinander verbunden sind. Die Teil-Mantelflächen 15a, 15b werden getrennt durch eine Teil-Mantelfläche 16g aus dem zweiten Kunststoffmaterial 7, welche grundsätzlich in Umfangsrichtung umlaufend ausgebildet ist und im Bereich einer Einschnürung 19 des Griffes 5 angeordnet ist. Allerdings sind im Bereich der Teil-Mantelfläche 16g ein grafisches Zeichen 20 sowie Ziffern 21a, 21b, 21c, 21d angeordnet (vgl. **Fig. 2**), wobei für das dargestellte Ausführungsbeispiel das grafische Zeichen 20 ein Pfeil entsprechend einer Marke der Anmelderin ist und die Ziffern 21a bis 21d ein Bestandteil des Namens der Anmelderin sind und ebenfalls Bestandteil einer Marke der Anmelderin sind. Das grafische Zeichen 20 sowie die Ziffern 21a bis 21d werden jeweils von Teil-Mantelflächen 15c, 15d, 15e, 15f, 15g aus dem ersten Kunststoffmaterial 6 gebildet, welche jeweils von der Teil-Mantelfläche 16g umschlossen sind. Infolge der unterschiedlichen Farben des ersten Kunststoffmaterials 6 und des zweiten Kunststoffmaterials 7 sind somit das grafische Zeichen 20 und die Ziffern 21a bis 21d optisch an der Mantelfläche 14 erkennbar. Möglich ist, dass Ziffern 21b, 21d (hier die Buchstaben "e", "o") innenliegende, von den Teil-Mantelflächen 15e, 15g aus dem ersten Kunststoffmaterial 6 umschlossene Innenflächen aufweisen, die von Teil-Mantelflächen 16h, 16i des zweiten Kunststoffmaterials 7 gebildet sind.

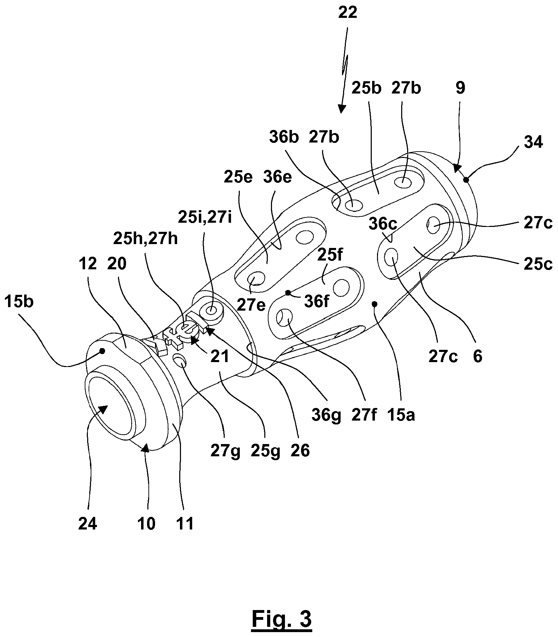

**Fig. 3** zeigt einen Griffkern 22 des Griffes 5, welcher separat und als Einlegeteil für eine Form für ein anschließendes Spritzgießverfahren hergestellt ist und aus dem ersten Kunststoffmaterial 6 besteht. Der Griffkern 22 weist eine sacklochartige, einen Boden 23 ausbildende Längsausnehmung 24 auf, die in Richtung einer Längsachse orientiert ist. Die Außenfläche des Griffkerns 22 bildet die Teil-Mantelflächen 15 aus, während die Außenfläche des Griffkerns 22 im Bereich der später mit dem zweiten Kunststoffmaterial 7 gefüllten Teil-Mantelflächen 16 Aufnahmeräume 25a, 25b ... 25i ausbildet, welche der späteren Aufnahme des zweiten Kunststoffmaterials 7 dienen. In dem Aufnahmeraum 25g erstrecken sich Rippen 26 des Griffkerns 22 entsprechend dem grafischen Zeichen und den Ziffern 21a, 21 b, 21c, 21d radial nach außen.

Zwecks Bildung der Teil-Mantelflächen 16h, 16i begrenzen die Rippen 26 randseitig Aufnahmeräume 25h, 25i, in welchen später das zweite Kunststoffmaterial 7 für die Ausbildung der Teil-Mantelflächen 16h, 16i angeordnet ist.

Die Längsausnehmung 24 des Griffkerns 22 ist über radial orientierte Verbindungskanäle 27 mit den Aufnahmeräumen 25 verbunden, wobei jedem Aufnahmeraum 25 mindestens ein Verbindungskanal 27 zugeordnet ist. Wie in Fig. 2 zu erkennen ist, sind für das dargestellte Ausführungsbeispiel die Aufnahmeräume 25a bis 25f jeweils mit zwei zugeordneten Verbindungskanälen 27 ausgestattet.

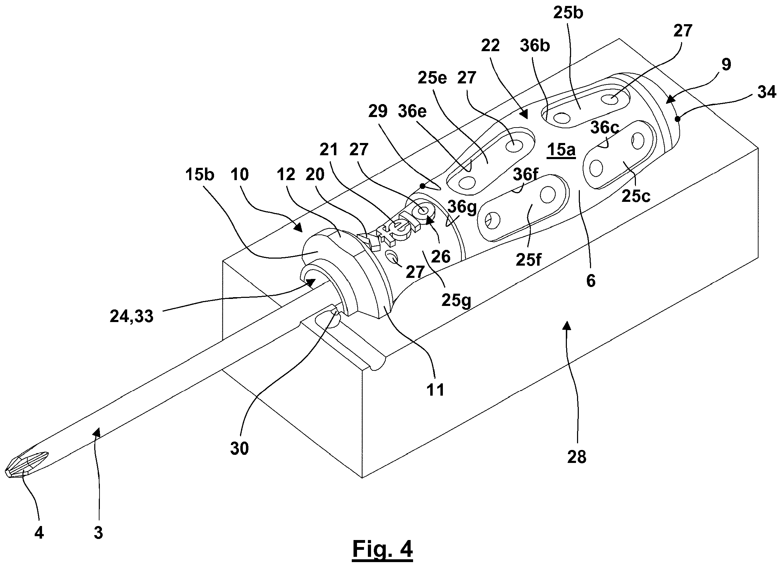

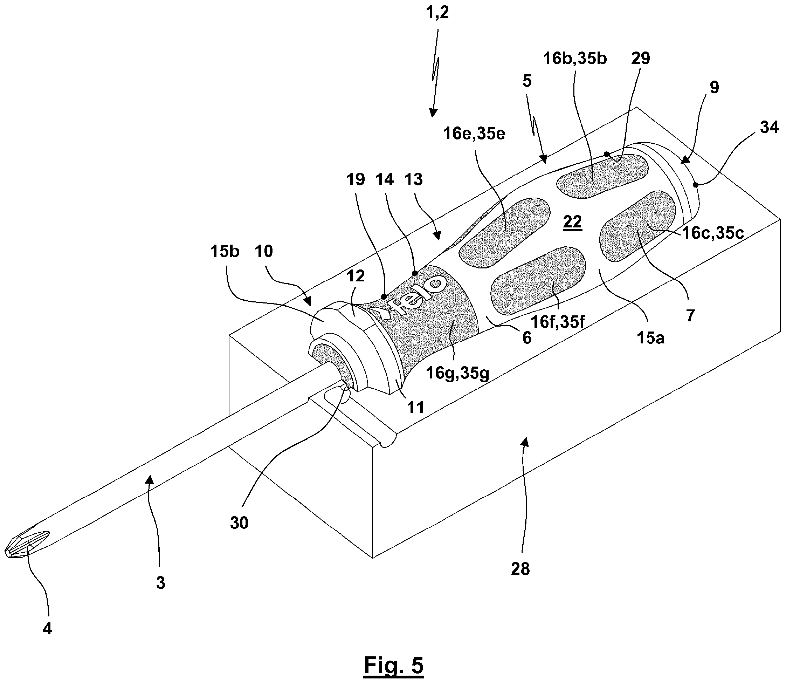

Gemäß **Fig. 4** wird der Griffkern 22 gemäß Fig. 3 in eine Form 28 im Bereich einer Kavität 29 eingelegt. Hierbei entspricht die Geometrie der Kavität 29 der Außengeometrie des Griffkerns 22 im Bereich der Teil-Mantelflächen 15, während die Kavität 29 im Bereich der Aufnahmeräume 25 der Geometrie der herzustellenden Teil-Mantelflächen 16 aus dem zweiten Kunststoffmaterial 7 entspricht, so dass die Kavität 29 die Aufnahmeräume 25 auf der radial außen liegenden Seite begrenzt. Wird über mindestens eine Einspritzöffnung 30 der Form 28 zweites Kunststoffmaterial 7 in die Längsausnehmung 24 eingespritzt, füllt dieses die Längsausnehmung 24 vollständig aus und tritt über die Verbindungskanäle 27 radial nach außen in die Aufnahmeräume 25, bis diese vollständig gefüllt sind (vgl. **Fig. 5**).

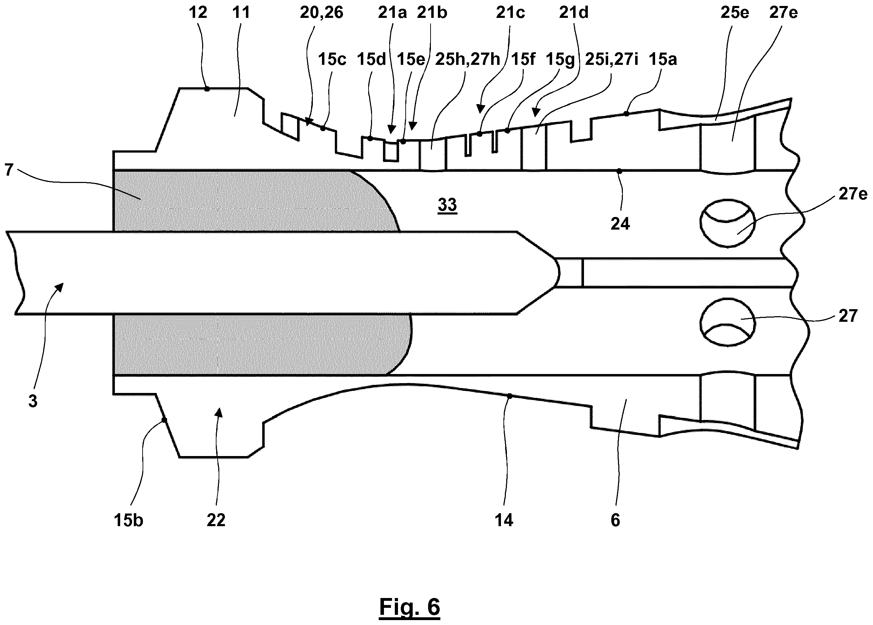

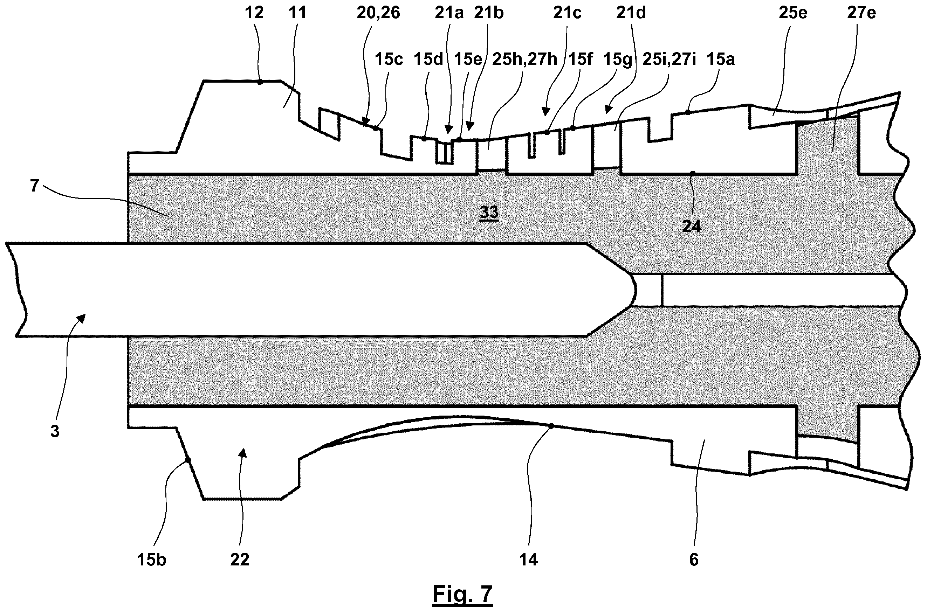

Dieses ist im Detail schematisiert in den **Fig. 6 bis 8** dargestellt, wobei hier zwecks Vereinfachung die Form 28 mit der Kavität 29 nicht dargestellt ist. Zu Beginn des Einbringens des zweiten Kunststoffmaterials 7 wandert dieses gemäß Fig. 6 entlang des Schaftes 3 in das Innere der Längsausnehmung 24, bis die Längsausnehmung 24 gemäß **Fig. 7** vollständig gefüllt ist. Das zweite Kunststoffmaterial 7 füllt dabei einen Zwischenraum 33 aus, welcher als Ringraum oder hohlzylindrischer Raum zwischen dem Griffkern 22 und dem Schaft 3 ausgebildet ist. Das zweite Kunststoffmaterial 7 tritt dann durch die Verbindungskanäle 27 radial nach außen, um die Aufnahmeräume 25 wie dargestellt zu befüllen. Am Ende bildet das zweite Kunststoffmaterial 7 in der Längsausnehmung 24 einen ersten Materialbereich 31, während dieses auf der Außenseite des Griffkerns 22 in den Aufnahmeräumen 25 zweite Materialbereiche 32 ausbildet. Die Materialbereiche 31, 32 sind über die Verbindungskanäle 27 miteinander verbunden. Die zweiten Materialbereiche 32 bilden die Teil-Mantelflächen 16 aus. Eine Befüllung der Aufnahmeräume 25 über Einspritzöffnungen radial außen liegend von den Aufnahmeräumen 25 ist nicht erforderlich, wobei dieses durchaus auch für einen Teil der Aufnahmeräume erfolgen kann.

Die zweiten Materialbereiche 32 im Bereich der Aufnahmeräume 25a, 25b, 25c, 25d, 25e, 25f sowie 25g, welche die Teil-Mantelflächen 16a, 16b, 16c, 16d, 16e, 16f, 16g ausbilden, bilden Griffpolster 35a, 35b, 35c, 35d, 35e, 35f sowie 35g aus dem zweiten Kunststoffmaterial 7, die jeweils durch Umrandungen 36a, 36b, 36c, 36d, 36e, 36f, 36g begrenzt sind, welche von dem Griffkern 22 und damit dem ersten Kunststoffmaterial 6 ausgebildet sind.

Das zweite Kunststoffmaterial 7 bildet mit den Materialbereichen 31, 32 sowie dem in den Verbindungskanälen 27 angeordneten Material einen Griffkörper 37, der den Griffkern 22 durchdringt und mit diesem den Griff 5 bildet.

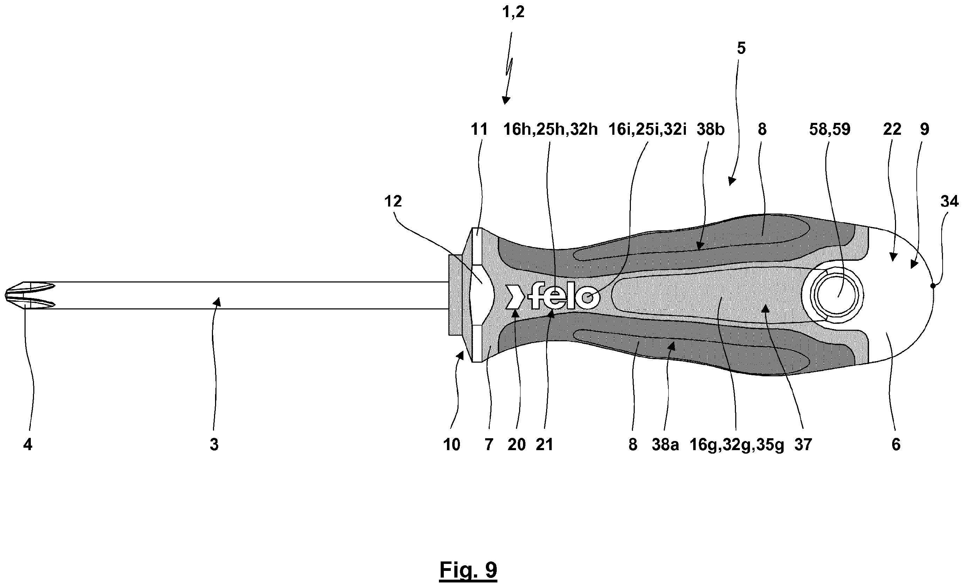

In den **Fig. 9 bis 17** sind ein Schraubendreher 2 und ein Verfahren zur Herstellung desselben dargestellt. Hier verfügt der Griff 5 zusätzlich zu dem Griffkern 22 aus dem ersten Kunststoffmaterial 6 und dem Griffkörper 37 mit den Materialbereichen 31, 32 aus dem zweiten Kunststoffmaterial 7 über zwei Griffpolster 38a, 38b aus dem dritten Kunststoffmaterial 8. In diesem Fall bildet der Griffkörper 37 aus dem zweiten Kunststoffmaterial 7 keine über die Mantelfläche 14 des Schraubendrehers 2 verteilten Griffpolster 35 aus, wobei aber dennoch der Griffkörper 37 eine kleinere Steifigkeit und/oder Härte haben kann als der Griffkern 22.

Entsprechend der Beschreibung des Ausführungsbeispiels gemäß Fig. 1 bis 8 erzeugen auch gemäß Fig. 9 bis 17 die Kunststoffmaterialien 6, 7 mit den von diesen ausgebildeten Teil-Mantelflächen 15, 16 das grafische Zeichen 20 und die Ziffern 21. Allerdings verfügt der Griffkern 22 im Bereich der Verbindungskanäle 27h, 27i über eine Ausnehmung oder Nut 39, über welche im Umgebungsbereich der Verbindungskanäle 27h, 27i die Wandstärke 49 des Griffkerns 22 reduziert ist. Dies hat zur Folge, dass die radiale Erstreckung der Verbindungskanäle 27h, 27i verringert ist. Hierdurch kann, auch für einen kleinen Durchmesser der Verbindungskanäle 27h, 27i eine Art Drosselwirkung der Verbindungskanäle 27h, 27i für den Durchtritt des lediglich begrenzt fließfähigen zweiten Kunststoffmaterials 7 reduziert werden, womit die Befüllung der Aufnahmeräume 25h, 25i vereinfacht ist. Entsprechende Ausnehmungen oder Nuten 40, 41, 42 können auch für weitere Verbindungskanäle 27 in dem Griffkern 22 vorhanden sein, was gemäß dem dargestellten Ausführungsbeispiel durch gleichmäßig über den Umfang verteilte Nuten 39 bis 42 realisiert ist, welche auch unterschiedliche Längserstreckungen haben können. Abseits des grafischen Zeichens 20 und der Ziffern 21 bildet das zweite Kunststoffmaterial 7 einen durchgehenden Griffkörper 37 aus, welcher eine einzige Teil-Mantelfläche 16g der Mantelfläche 14 bildet. An zwei auf gegenüberliegenden Seiten angeordneten Teil-Außenflächen 43a, 43b sind die Griffpolster 38a, 38b aus dem dritten Kunststoffmaterial 8 angespritzt. Die Griffpolster 38a, 38b bilden mit ihren Außenflächen Teil-Mantelflächen 44a, 44b, welche sich mit der Teil-Mantelfläche 16g des Griffkörpers 37 zu einer in Umfangsrichtung geschlossenen Mantelfläche des Griffes 5 ergänzen.

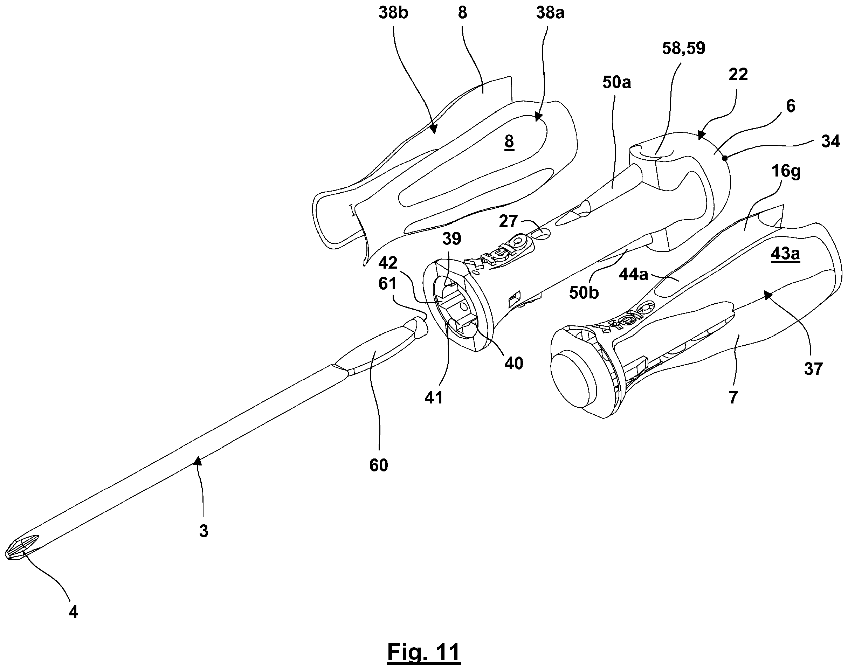

Wie in **Fig. 11** zu erkennen ist, bildet der Griffkern 22 in dem von dem zweiten Kunststoffmaterial 7 ummantelten Axialabschnitt unterhalb der Teil-Mantelfläche 16g auf gegenüberliegenden Seiten Rippen 50a, 50b aus, mittels welchen eine formschlüssige Übertragung eines Torsionsmomentes zwischen dem Griffkörper 37 und dem Griffkern 38 erfolgt und die Anbindung zwischen dem Griffkörper 37 und dem Griffkern 22 verbessert wird.

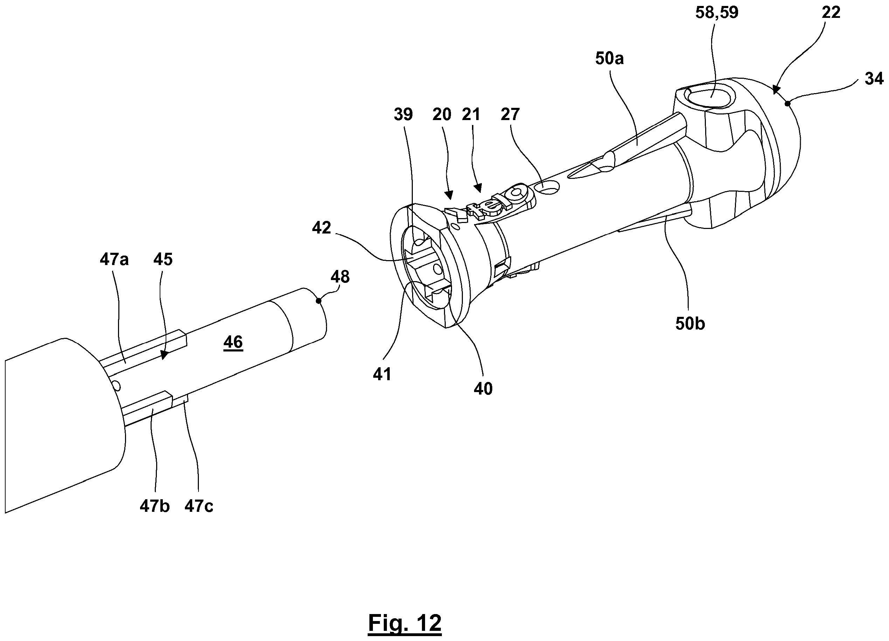

**Fig. 12** zeigt die Herstellung des Griffkerns 22 mit einem Spritzgießkern 45, dessen zylindrischer Grundkörper46 die Längsausnehmung 24 ausformt, dessen Rippen 47a, 47b, 47c, 47d die Nuten 39, 40, 41, 42 des Griffkerns 22 ausformen und dessen Stirnseite 48 den Boden 23 der Längsausnehmung 24 des Griffkerns 22 ausformt.

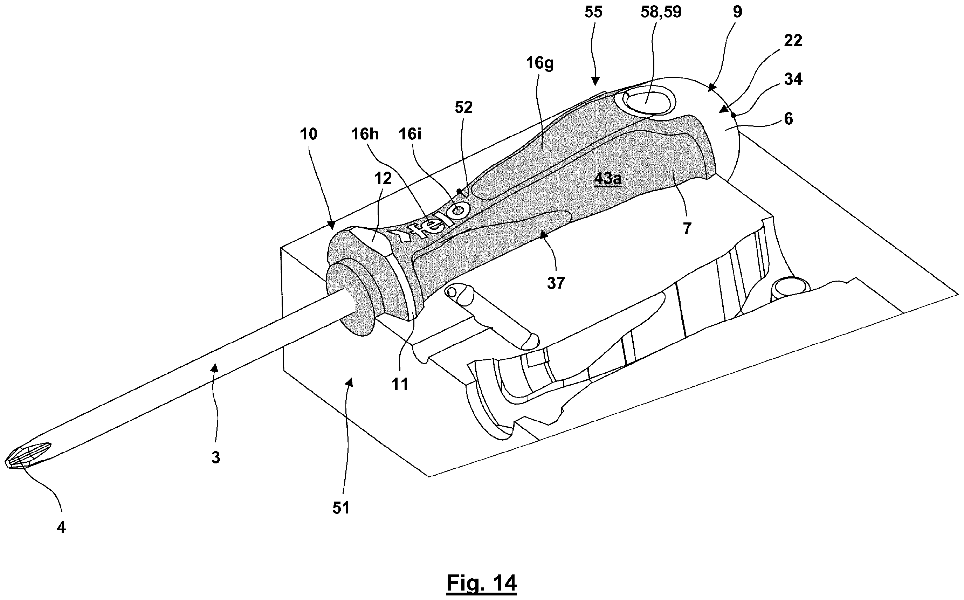

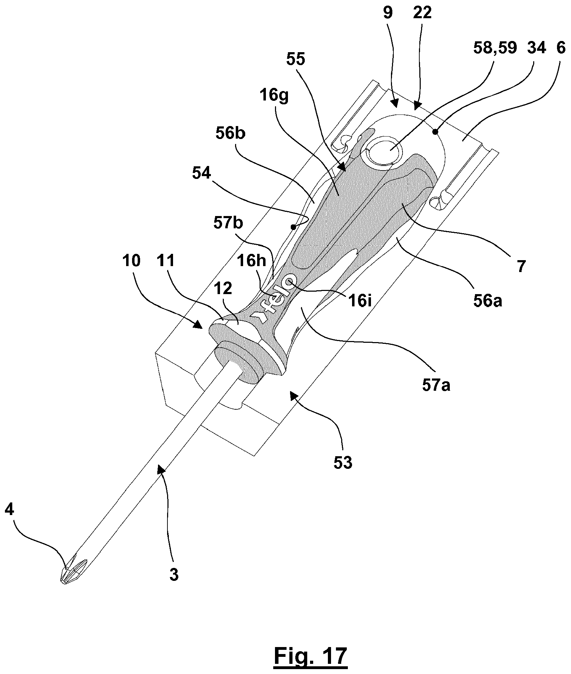

Gemäß **Fig. 14** erfolgt das Einspritzen des ersten zweiten Kunststoffmaterials 7 in eine erste Form 51, in die der Griffkern 22 und in den Griffkern 22 der Schaft 3 eingelegt sind. Wie für das Ausführungsbeispiel gemäß Fig. 1 bis 8 beschrieben worden ist, gelangt das zweite Kunststoffmaterial 7 von der Längsausnehmung 24 durch die Verbindungskanäle 27 in die Aufnahmeräume 25g, 25h, 25i und bildet die Materialbereiche 31 sowie 32g, 32h und 32i sowie die Teil-Mantelflächen 16g, 16h und 16i aus. Allerdings entspricht die Geometrie einer Kavität 52 der Form 51 nicht der Geometrie der gesamten Mantelfläche 14 des herzustellenden Griffes 5. Vielmehr entspricht die Geometrie der Kavität 52 lediglich im Bereich der Teil-Mantelflächen 16g, 16h, 16i der Geometrie der Mantelfläche 14 des herzustellenden Griffes 5, während diese im Bereich der Teil-Außenflächen 43a, 43b, an welche später die Griffpolster 38a, 38b angespritzt werden, kleiner ist als die Geometrie der Mantelfläche 14 des herzustellenden Griffes 5. Nach dem Aushärten des zweiten Kunststoffmaterials 7 ist ein Zwischenprodukt 55 hergestellt, welches aus dem Schaft 3, dem Griffkern 22 und Griffkörper 37 besteht. Dieses Zwischenprodukt 55 wird dann in eine zweite Form 53 eingelegt (vgl. Fig. 17). Eine Kavität 54 dieser zweiten Form 53 hat dann eine Geometrie, welche über den gesamten Umfang der Geometrie der Mantelfläche 14 des herzustellenden Griffes 5 entspricht. Somit ergeben sich zwischen dem Zwischenprodukt 55 und der Form 53 auf gegenüberliegenden Seiten zwei Hohlräume 56a, 56b. Die Hohlräume 56 sind außenliegend von der Form 53 und innenliegend von den Teil-Außenflächen 43, 44 begrenzt. In die Hohlräume 56 wird dann das dritte Kunststoffmaterial 8 eingespritzt, welches damit stoffschlüssig an die Teil-Außenflächen 43a, 43b angebunden wird und die Griffpolster 38a, 38b ausbildet.

Möglich ist, dass das zweite Kunststoffmaterial 7 des Griffkörpers 37 zwischen den Endbereichen 9, 10 des Griffkerns (mit Ausnahme von den grafischen Zeichen 20 und den Ziffern 21) den Griffkern 22 vollständig ummantelt. In Fig. 17 ist anhand der hier dargestellten Teil-Außenflächen 57a, 57b des Griffkerns 22 zu erkennen, dass in einem zugeordneten Teilbereich die Form 51 unmittelbar an den Griffkern 22 anschließen kann, womit dann in diesem Bereich mit dem Einspritzen des dritten Kunststoffmaterials 8 in die Form 53 auch eine unmittelbare Anbindung der Griffpolster 38a, 38b an den Griffkern 22 im Bereich der Teil-Außenflächen 57a, 57b erfolgt, so dass jedes Griffpolster 38a, 38b sowohl stoffschlüssig mit dem Griffkern 22 als auch mit dem Griffkörper 37 verbunden ist.

Wie in den Figuren zu erkennen ist, kann der Griffkern 22 in dem Endbereich 9 über eine durchgehende, eine Öse 58 bildende Querbohrung 59 verfügen.

Für die dargestellten Ausführungsbeispiele und die zugeordnete Beschreibung erfolgte ein Einbringen des zweiten Kunststoffmaterials 7 im Spritzgießverfahren von innen über die Längsausnehmung 24 mit einem Hindurchtritt des zweiten Kunststoffmaterials 7 durch die Verbindungskanäle 27 radial nach außen zu den Aufnahmeräumen 25. Im Rahmen der Erfindung ist durchaus ein umgekehrtes Einbringen des zweiten Kunststoffmaterials 7 möglich. In diesem Fall erfolgt ein Einspritzen des zweiten Kunststoffmaterials 7 in mindestens einen Aufnahmeraum 25 mit anschließendem Hindurchtritt des zweiten Kunststoffmaterials 7 radial nach innen durch die Verbindungskanäle 27 mit anschließender Befüllung der Längsausnehmung 24 mit dem zweiten Kunststoffmaterial 7.

In den Figuren sind teilweise gleiche Merkmale oder Komponenten wie die Teil-Mantelflächen 15, die Teil-Mantelflächen 16, die Aufnahmeräume 25, die Verbindungskanäle 27 und die zweiten Materialbereiche 32 mit denselben Bezugszeichen gekennzeichnet, wobei diese dann durch ergänzte Buchstaben a, b, c, ... voneinander unterschieden sind. Auf diese Merkmale oder Komponenten wird dann teilweise in der Beschreibung oder in den Patentansprüchen mit oder ohne den ergänzenden Buchstaben Bezug genommen, wobei bei Verwendung ohne den ergänzenden Buchstaben
- sämtliche derart gekennzeichneten Merkmale oder Komponenten
- ein Teil der derart gekennzeichneten Merkmale oder Komponenten oder
- nur ein Merkmal oder eine Komponente
gemeint sein kann.

Wie in Fig. 11 zu erkennen ist, kann der Schaft 3 in dem in den Griff 5 eingebetteten Axialabschnitt eine Abflachung 60 aufweisen, welche eine verbesserte Übertragung eines Torsionsmomentes zwischen dem Schaft 3 und dem Griff 5 ermöglicht, indem die Fläche, im Bereich welcher der Griffkörper 37 an den Schaft 3 angebunden ist, vergrößert ist, womit sich verringerte Flächenpressungen ergeben. Der Schaft 3 weist auf der der Funktionsspitze 4 abgewandten Seite eine Stirnseite 61 auf, welche unmittelbar an dem Boden 23 anliegt oder beabstandet von diesem angeordnet sein kann.

In den Figuren sind die unterschiedlichen Kunststoffmaterialien 6, 7, 8 mit weißen Flächen für das erste Kunststoffmaterial 6, hellgrauen Flächen für das zweite Kunststoff material 7 und dunkelgrauen Flächen für das dritte Material 8 dargestellt. Vorzugsweise nimmt eine Härte und/oder eine Steifigkeit des Kunststoffmaterials mit zunehmendem Grau- oder Schwarzanteil der Fläche zur Kennzeichnung des Kunststoffmaterials zu.

Zwei mögliche unterschiedliche Ausführungsbeispiele für das erfindungsgemäße "Anschließen des zweiten Materialbereichs aus dem zweiten Kunststoffmaterial an den Griffkern im Bereich der Außenfläche des Griffkerns" können beispielhaft anhand Fig. 8 erläutert werden:
Der Verbindungskanal 27e mündet mit einer Erweiterung außenliegend in einen Aufnahmeraum 25e, welcher dann mit dem zweiten Kunststoffmaterial gefüllt ist. In diesem Fall schließt der zweite Materialbereich aus dem zweiten Kunststoffmaterial radial außen liegend im Bereich des Bodens des Aufnahmeraums 25e an den Griffkern im Bereich der Mantelfläche des Griffkerns an mit einer stoffschlüssigen Verbindung.

Möglich ist aber auch, dass keine derartige Erweiterung des Verbindungskanals vorhanden ist. Dies ist beispielsweise für den Verbindungskanal 27i der Fall, dessen außenliegender Endbereich ohne Erweiterung unmittelbar den Aufnahmeraum 25i ausbildet. In diesem Fall schließt das zweite Kunststoffmaterial im Bereich der Außenfläche bündig an die Außenfläche des Griffkerns aus dem ersten Kunststoffmaterial im Umgebungsbereich des Verbindungskanals an. In diesem Fall erfolgt das "Anschließen des zweiten Materialbereichs aus dem zweiten Kunststoffmaterial an den Griffkern" durch ein Anschließen im Bereich einer außenliegenden Begrenzungsfläche oder Begrenzungslinie des Verbindungskanals 27i bzw. des von diesem ausgebildeten Aufnahmeraums 25i.

Für das erste Kunststoffmaterial und das zweite Kunststoffmaterial können beliebige Materialien eingesetzt werden. Vorzugsweise findet als erstes Kunststoffmaterial, also als Material für den Griffkern 22, ein Polypropylen (PP) Einsatz mit einer Härte 68 R nach ISO 2039/2. Als zweites Kunststoffmaterial kann beispielsweise dasselbe Material eingesetzt werden, welches dann aber eine andere Farbe aufweisen kann. Möglich ist aber auch, dass in diesem Fall als zweites Kunststoffmaterial ein thermoplastisches Elastomer (TPE) mit einer Härte von 70 bis 80 Shore A oder mit einer Härte von 80 bis 95 Shore A eingesetzt wird. Hierbei ist auch möglich, dass in einem Satz von Schraubendrehern für Schraubendreher, welche für kleine Drehmomente bestimmt sind und eine kleinere Funktionsspitze aufweisen, ein thermoplastisches Elastomer (TPE) mit einer Härte von 70 bis 80 Shore A eingesetzt wird, während für Schraubendreher, die für größere Drehmomente bestimmt sind und eine größere Funktionsspitze aufweisen, ein thermoplastisches Elastomer (TPE) mit einer Härte von 80 bis 95 Shore A eingesetzt wird.

### BEZUGSZEICHENLISTE

- 1: Handwerkzeug
- 2: Schraubendreher
- 3: Schaft
- 4: Funktionsspitze
- 5: Griff
- 6: erstes Kunststoffmaterial
- 7: zweites Kunststoffmaterial
- 8: drittes Kunststoffmaterial
- 9: Endbereich
- 10: Endbereich
- 11: Kragen
- 12: Abflachung
- 13: Betätigungsbereich
- 14: Mantelfläche
- 15: Teil-Mantelfläche (erstes Kunststoffmaterial)
- 16: Teil-Mantelfläche (zweites Kunststoffmaterial)
- 17: Satz
- 18: Satz
- 19: Einschnürung
- 20: grafisches Zeichen
- 21: Ziffer
- 22: Griffkern
- 23: Boden
- 24: Längsausnehmung
- 25: Aufnahmeräume
- 26: Rippen
- 27: Verbindungskanal
- 28: Form
- 29: Kavität
- 30: Einspritzöffnung
- 31: erster Materialbereich
- 32: zweiter Materialbereich
- 33: Zwischenraum
- 34: Stirnseite
- 35: Griffpolster
- 36: Umrandung
- 37: Griffkörper
- 38: Griffpolster
- 39: Nut
- 40: Nut
- 41: Nut
- 42: Nut
- 43: Teil-Außenfläche
- 44: Teil-Mantelfläche
- 45: Spritzgießkern
- 46: Grundkörper
- 47: Rippe
- 48: Stirnseite
- 49: Wandstärke
- 50: Rippe
- 51: Form
- 52: Kavität
- 53: Form
- 54: Kavität
- 55: Zwischenprodukt
- 56: Hohlraum
- 57: Teil-Außenfläche
- 58: Öse
- 59: Querbohrung
- 60: Abflachung
- 61: Stirnseite

## Patentansprüche

1. Handwerkzeug (1) mit
a) einem Schaft (3) und
b) einem Griff (5), in den der Schaft (3) derart formschlüssig und/oder stoffschlüssig eingebettet ist, dass eine manuell applizierte Betätigungskraft zwischen dem Griff (5) und dem Schaft (3) übertragbar ist,
c) wobei der Griff (5)
ca) einen Griffkern (22) aus einem ersten Kunststoffmaterial (6) und
cb) einen Materialbereich aus einem zweiten Kunststoffmaterial (7), welches von dem ersten Kunststoffmaterial (6) abweicht,
aufweist,
**dadurch gekennzeichnet, dass**
d) der Griffkern (22) innenliegend einen Zwischenraum (33) mit dem Schaft (3) ausbildet, der mit einem ersten Materialbereich (31) aus dem zweiten Kunststoffmaterial (7) gefüllt ist, und
e) an den Griffkern (22) im Bereich seiner Außenfläche ein zweiter Materialbereich (31) aus dem zweiten Kunststoffmaterial (7) anschließt,
f) wobei der erste Materialbereich (31) und der zweite Materialbereich (32) durch einen axialen oder radialen, mit dem zweiten Kunststoffmaterial (7) gefüllten Verbindungskanal (27) des Griffkerns (22) miteinander verbunden sind.

2. Handwerkzeug (1) nach Anspruch 1, **dadurch gekennzeichnet, dass** die Wandstärke (49) des Griffkerns (22) im Umgebungsbereich des Verbindungskanals (27) durch eine Ausnehmung, Stufe oder Nut (39, 40, 41, 42) reduziert ist.

3. Handwerkzeug (1) nach Anspruch 1 oder 2, **dadurch gekennzeichnet, dass** der Schaft (3) in dem in dem Griff (5) angeordneten Längsabschnitt über die gesamte Länge in den ersten Materialbereich (31) aus dem zweiten Kunststoffmaterial (7) eingebettet ist und
a) der erste Materialbereich (31) aus dem zweiten Kunststoffmaterial (7) auch zwischen einer Stirnseite (61) des Schaftes (3) und einem Boden (23) einer Längsausnehmung (24) des Griffkerns (22) für den Schaft (3) angeordnet ist oder
b) der Schaft (3) unmittelbar an einem Boden (23) einer Längsausnehmung (24) des Griffkerns (22) abgestützt ist.

4. Handwerkzeug (1) nach einem der vorhergehenden Ansprüche, **dadurch gekennzeichnet, dass**
a) mindestens eine Teil-Mantelfläche (16) des Griffs (5) von dem zweiten Materialbereich (32) aus dem zweiten Kunststoffmaterial (7) ausgebildet ist und
b) mindestens eine Teil-Mantelfläche (15) des Griffs (5) von dem Griffkern (22) aus dem ersten Kunststoffmaterial (6) ausgebildet ist.

5. Handwerkzeug (1) nach Anspruch 4, **dadurch gekennzeichnet, dass** mindestens eine von dem Griffkern (22) ausgebildete Teil-Mantelfläche (15) eine Stirnseite (34) des Griffs (5) ausbildet.

6. Handwerkzeug (1) nach einem der vorhergehenden Ansprüche, **dadurch gekennzeichnet, dass** der Griffkern (22) im Bereich eines einer Funktionsspitze (4) zugewandten Endbereichs (10) einen Kragen (11) ausbildet.

7. Handwerkzeug (1) nach einem der Anspruch 5 und 6, **dadurch gekennzeichnet, dass**
a) eine von dem Griffkern (22) ausgebildete Teil-Mantelfläche (15) eine Ziffer (21) oder ein grafisches Zeichen (20) ausbildet und
b) eine von dem zweiten Materialbereich (32) aus dem zweiten Kunststoffmaterial (7) ausgebildete Teil-Mantelfläche (16) eine im Inneren der Ziffer (21) oder des grafischen Zeichens (20) liegende Teil-Mantelfläche (16h; 16i) ausbildet.

8. Handwerkzeug (1) nach einem der Ansprüche 5 bis 7, **dadurch gekennzeichnet, dass**
a) eine von dem Griffkern (22) aus dem ersten Kunststoffmaterial (6) ausgebildete Teil-Mantelfläche (15) eine Umrandung (36) eines Griffpolsters (35) ausbildet und
b) ein zweiter Materialbereich (32) aus dem zweiten Kunststoffmaterial (7) das Griffpolster (35) ausbildet.

9. Handwerkzeug (1) nach einem der vorhergehenden Ansprüche, **dadurch gekennzeichnet, dass** das erste Kunststoffmaterial (6) eine größere Härte und/oder Steifigkeit aufweist als das zweite Kunststoffmaterial (7).

10. Handwerkzeug (1) nach einem der vorhergehenden Ansprüche, **dadurch gekennzeichnet, dass**
a) an den Griffkern (22) aus dem ersten Kunststoffmaterial (6) und/oder
b) einen Materialbereich (32) oder einen Griffkörper (45) aus dem zweiten Kunststoffmaterial (7)
ein Griffpolster (38) aus einem dritten Kunststoffmaterial (8) angespritzt ist.

11. Handwerkzeug (1) nach Anspruch 10, **dadurch gekennzeichnet, dass** das erste Kunststoffmaterial (6) und das zweite Kunststoffmaterial (7) größere Härten aufweisen als das dritte Kunststoffmaterial (8).

12. Verfahren zur Herstellung eines Handwerkzeugs (1) nach einem der vorhergehenden Ansprüche, mit folgenden Verfahrensschritten:
a) Einlegen des Griffkerns (22) aus dem ersten Kunststoffmaterial (6) und des Schaftes (3) oder eines mit dem Schaft korrelierenden Kerns unter Ausbildung des Zwischenraumes (33) zwischen dem Schaft (3) oder Kern und dem Griffkern in eine Form (28; 51), deren Kavität (29; 52)
aa) in mindestens einem Teilbereich der Außenkontur des Griffkerns (22) entspricht und
ab) in mindestens einem Teilbereich der Außenkontur des zweiten Materialbereichs (32) entspricht,
b) Einspritzen des zweiten Kunststoffmaterials (7) in den Zwischenraum (33) zwischen Schaft (3) und Griffkern (22), womit das zweite Kunststoffmaterial (7) von dem Zwischenraum (33) durch den Verbindungskanal (27) in den zweiten Materialbereich (32) überführt wird.

13. Verfahren nach Anspruch 12, **dadurch gekennzeichnet, dass** die Kavität (29) der Form (28) der Geometrie des Griffes (5) entspricht.

14. Verfahren nach Anspruch 12, **dadurch gekennzeichnet, dass**
a) die Kavität (52) der Form (51) in einem Teilbereich der Geometrie des Griffes (5) entspricht und in einem Teilbereich kleiner ist als die Geometrie des Griffes (5),
b) nach dem Aushärten des in den Zwischenraum (33) zwischen Schaft (3) und Griffkern eingespritzten und von dem Zwischenraum (33) durch den Verbindungskanal (27) in den zweiten Materialbereich (32) überführten zweiten Kunststoffmaterials (7) der Griffkern (22) mit dem Schaft (3) und dem ausgehärteten zweiten Kunststoffmaterial (7) in eine andere Form (53) eingelegt wird, deren Kavität (54) in dem Teilbereich, in dem die Kavität (52) der zuvor verwendeten Form (51) kleiner war als die Geometrie des Griffes (5), der Geometrie des Griffes (5) entspricht, so dass sich zwischen dem Griffkern (22) und/oder dem ausgehärteten zweiten Kunststoffmaterial (7) ein Hohlraum (56) ergibt, und
c) in den Hohlraum (56) ein oder das dritte Kunststoffmaterial (8) eingespritzt wird.

## Claims

1. Handheld tool (1) comprising
a) a shank (3) and
b) a handle (5)wherein the shank (3) is embedded with a positive engagement and/or with an adhesive bond in a way such that a manually applied actuation force is transmitted between the handle (5) and the shank (3),
c) the handle (5) comprising
ca) a handle core (22) made of a first plastic material (6) and
cb) a material portion made of a second plastic material (7) which differs from the first plastic material (6),
**characterised in that**
d) the interior of the handle core (22) and the shank (3) form or define an interspace (33) with which is filled with a first material portion (31) made from the second plastic material (7) and
e) a second material portion (31) made from the second plastic material (7) adjoins to the handle core (22) in the region of the outer surface of the handle core (22),
f) the first material portion (31) and the second material portion (32) being connected to each other by an axial or radial connecting channel (27) of the handle core (22) which is filled with the second plastic material (7).

2. Handheld tool (1) of claim 1, **characterised in that** the wall thickness (49) of the handle core (22) is reduced in the neighbourhood of the connecting channel (27) by a recess, step, shoulder or groove (39, 40, 41, 42).

3. Handheld tool (1) of claim 1 or 2, **characterised in that** in the longitudinal section arranged in the handle (5) the shank (3) is embedded over the whole length in the first material portion (31) made from the second plastic material (7) and
a) the first material portion (31) made from the second plastic material (7) is also arranged between a front face (61) of the shank (3) and the bottom (23) of a longitudinal recess (24) of the handle core (22) for the shank (3) or
b) the shank (3) is directly supported on a bottom (23) of a longitudinal recess (24) of the handle core (22).

4. Handheld tool (1) of one of the preceding claims, **characterised in that**
a) at least a subsection (16) of the outer surface of the handle (5) is formed by the second material portion (32) made from the second plastic material (7) and
b) at least a sub-portion (15) of the outer surface of the handle (5) is formed by the handle core (22) made from the first plastic material (6).

5. Handheld tool (1) of claim 4, **characterised in that** at least a subsection (15) of the outer surface formed by the handle core (22) forms a front face (34) of the handle (5).

6. Handheld tool (1) of one of the preceding claims, **characterised in that** in the region of an end portion (10) facing towards the functional tip (4) the handle core (22) forms a collar (11).

7. Handheld tool (1) of one of claims 5 and 6, **characterised in that**
a) a subsection (15) of the outer surface formed by the handle core (22) forms a cypher (21) or a graphical figure (20) and
b) a subsection (16) of the outer surface (16) formed by the second material portion (32) made from the second plastic material (7) forms a subsection (16h; 16i) of the outer surface being arranged within the cypher (21) or the graphical figure (20).

8. Handheld tool (1) of one of claims 5 to 7, **characterised in that**
a) a subsection (15) of the outer surface formed by the handle core (22) made from the first plastic material (6) forms a bordering or edge (36) of a handle cushion (35) and
b) a second material portion (32) made from the second plastic material (7) forms the handle cushion (35).

9. Handheld tool (1) of one of the preceding claims, **characterised in that** first plastic material (6) has a higher hardness and/or stiffness than the second plastic material (7).

10. Handheld tool (1) of one of the preceding claims, **characterised in that** a handle cushion (38) made from a third plastic material (8) is extruded or moulded
a) to the handle core (22) made from the first plastic material (6) and/or
b) to a material portion (32) or a handle body (45) made from the second plastic material (7).

11. Handheld tool (1) of claim 10, **characterised in that** the hardnesses of the first plastic material (6) and of the second plastic material (7) are higher than the hardness of the third plastic material (8).

12. Method for manufacturing a handheld tool (1) of one of the preceding claims, the method comprising the following method steps:
a) inserting the handle core (22) made from the first plastic material (6) and the shank (3) or a core correlating with the shank under the establishment of an interspace (33) between the shank (3) or core and the handle core into a mould (28; 51), the mould (28; 51) having a cavity (29; 52) which
aa) at least in a subsection corresponds to the outer contour of the handle core (22) and
ab) at least in a subsection corresponds to the outer contour of the second material portion (32),
b) injecting the second plastic material (7) into the interspace (33) between the shank (3) and the handle core (22) with the result that the second plastic material (7) is transferred from the interspace (33) through the connecting channel (27) to the second material portion (32).

13. Method of claim 12, **characterised in that** the cavity (29) of the mould (28) corresponds to the geometry of the handle (5).

14. Method of claim 12, **characterised in that**
a) in a subsection the cavity (52) of the mould (51) corresponds to the geometry of the handle (5) and in a subsection the cavity (52) of the mould (51) is smaller than the geometry of the handle (5),
b) after the curing or hardening of the second plastic material (7) which has been injected into the interspace (33) between the shank (3) and the handle core and which has been transferred through the connecting channel (27) from the interspace (33) to the second material portion (32) the handle core (22) with the shank (3) and with the cured or hardened second plastic material (7) is inserted into another mould (53), the cavity (54) of the other mould (53) in a subsection wherein the cavity (52) of the mould (51) which has been used before is smaller than the geometry of the handle (5) corresponding to the geometry of the handle (5) so that a hollow chamber (56) is defined between the handle core (22) and/or the hardened or cured second plastic material (7) and
c) a or the third plastic material (8) is injected into the hollow chamber (56).

## Revendications

1. Outil à main (1) avec
a) une tige (3) et
b) une poignée (5), dans laquelle la tige (3) est intégrée par complémentarité de forme et/ou par liaison de matière de façon à ce qu'une force d'actionnement appliquée manuellement puisse être transmise entre la poignée (5) et la tige (3),
c) dans lequel la poignée (5) comprend
ca) un noyau de poignée (22) constitué d'une première matière plastique (6) et
cb) une partie de matériau constituée d'une deuxième matière plastique (7) différente de la première matière plastique (6),
**caractérisé en ce que**
d) le noyau de poignée (22) forme, à l'intérieur, un espace intermédiaire (33) avec la tige (3), qui est rempli avec une première partie de matériau (31) constituée de la deuxième matière plastique (7) et
e) au noyau de poignée (22), au niveau de sa surface externe, se raccorde une deuxième partie de matériau (31) constituée de la deuxième matière plastique (7),
f) dans lequel la première partie de matériau (31) et la deuxième partie de matériau (32) sont reliées entre elles par un canal de liaison (27), axial ou radial, du noyau de poignée (22), rempli de la deuxième matière plastique (7).

2. Outil à main (1) selon la revendication 1, **caractérisé en ce que** l'épaisseur de paroi (49) du noyau de poignée (22) est réduite, dans la partie environnante du canal de liaison (27), par un évidement, un épaulement ou une rainure (39, 40, 41, 42).

3. Outil à main (1) selon la revendication 1 ou 2, **caractérisé en ce que** la tige (3) est intégrée, dans la portion longitudinale disposée dans la poignée (5), sur toute la longueur, dans la première partie de matériau (31) constituée de la deuxième matière plastique (7) et
a) la première partie de matériau (31) constituée de la deuxième matière plastique (7) est également disposée entre une face frontale (61) de la tige (3) et un fond (23) d'un évidement longitudinal (24) du noyau de poignée (22) pour la tige (3) ou
b) la tige (3) s'appuie directement contre un fond (23) d'un évidement longitudinal (24) du noyau de poignée (22).

4. Outil à main (1) selon l'une des revendications précédentes, **caractérisé en ce que**
a) au moins une surface d'enveloppe partielle (16) de la poignée (5) est formée par la deuxième partie de matériau (32) constituée de la deuxième matière plastique (7) et
b) au moins une surface d'enveloppe partielle (15) de la poignée (5) est formée par le noyau de poignée (22) constitué de la première matière plastique (6).

5. Outil à main (1) selon la revendication 4, **caractérisé en ce qu'**au moins une surface d'enveloppe partielle (15) formée par le noyau de poignée (22) forme une face frontale (34) de la poignée (5).

6. Outil à main (1) selon l'une des revendications précédentes, **caractérisé en ce que** le noyau de poignée (22) forme un col (11) au niveau d'une partie d'extrémité (10) orientée vers une pointe fonctionnelle (4).

7. Outil à main (1) selon l'une des revendications 5 et 6, **caractérisé en ce que**
a) une surface d'enveloppe partielle (15) formée par le noyau de poignée (22) comporte un chiffre (21) ou un symbole graphique (20) et
b) une surface d'enveloppe partielle (16) formée par la deuxième partie de matériau (32) constituée de la deuxième matière plastique (7) comporte une surface d'enveloppe partielle (16h ; 16i) se trouvant à l'intérieur du chiffre (21) ou du symbole graphique (20).

8. Outil à main (1) selon l'une des revendications 5 à 7, **caractérisé en ce que**
a) une surface d'enveloppe partielle (15) formée par le noyau de poignée (22) constitué de la première matière plastique (6) forme un bord périphérique (36) d'un rembourrage de poignée (35) et
b) une deuxième partie de matériau (32) constituée de la deuxième matière plastique (7) forme le rembourrage de poignée (35).

9. Outil à main (1) selon l'une des revendications précédentes, **caractérisé en ce que** la première matière plastique (6) présente une dureté et/ou une rigidité plus importante que la deuxième matière plastique (7).

10. Outil à main (1) selon l'une des revendications précédentes, **caractérisé en ce que**
a) sur le noyau de poignée (22) constitué de la première matière plastique (6) et/ou
b) une partie de matériau (32) ou un corps de base (45) constitué de la deuxième matière plastique (7),
est injecté un rembourrage de poignée (38) constitué d'une troisième matière plastique (8).

11. Outil à main (1) selon la revendication 10, **caractérisé en ce que** la première matière plastique (6) et la deuxième matière plastique (7) présentent des duretés plus importantes que la troisième matière plastique (8).

12. Procédé de fabrication d'un outil à main (1) selon l'une des revendications précédentes, avec les étapes suivantes :
a) insertion du noyau de poignée (22) constitué de la première matière plastique (6) et de la tige (3) ou d'un noyau couplé avec la tige, en formant l'espace intermédiaire (33) entre la tige (3) ou le noyau et le noyau de poignée, dans un moule (28 ; 51) dont la cavité (29 ; 52)
aa) correspond, dans au moins une partie, au contour externe du noyau de poignée (22) et
ab) correspond, dans au moins une partie, au contour externe de la deuxième partie de matériau (32),
b) injection de la deuxième matière plastique (7) dans l'espace intermédiaire (33) entre la tige (3) et le noyau de poignée (22), ce qui permet de faire passer la deuxième matière plastique (7) de l'espace intermédiaire (33) à travers le canal de liaison (27) vers la deuxième partie de matériau (32).

13. Procédé selon la revendication 12, **caractérisé en ce que** la cavité (29) du moule (28) correspond à la géométrie de la poignée (5).

14. Procédé selon la revendication 12, **caractérisé en ce que**
a) la cavité (52) du moule (51) correspond, dans une partie, à la géométrie de la poignée (5) et, dans une partie, est plus petite que la géométrie de la poignée (5),
b) après le durcissement de la deuxième matière plastique (7) injectée dans l'espace intermédiaire (33) entre la tige (3) et le noyau de poignée et transférée de l'espace intermédiaire (33) à travers le canal de liaison (27) vers la deuxième partie de matériau (32), le noyau de poignée (22) avec la tige (3) et la deuxième matière plastique (7) durcie est inséré dans un autre moule (53), dont la cavité (54), dans la partie dans laquelle la cavité (52) du moule (51) précédemment utilisé étant plus petite que la géométrie de la poignée (5), correspond à la géométrie de la poignée (5), de façon à ce que, entre le noyau de poignée (22) et/ou la deuxième matière plastique (7) durcie, se forme un espace vide (56) et
c) dans l'espace vide (56) est injectée une ou la troisième matière plastique (8).
